(19) **Europäisches Patentamt**
**European Patent Office**
**Office européen des brevets**

(11) **EP 4 734 520 A1**

(12) **EUROPEAN PATENT APPLICATION**

(43) Date of publication:
**29.04.2026 Bulletin 2026/18**

(21) Application number: **25210446.8**

(22) Date of filing: **22.10.2025**

(51) International Patent Classification (IPC):
**H04N 19/70** (2014.01)    **G06F 21/64** (2013.01)
**H04L 9/32** (2006.01)    **H04L 9/40** (2022.01)
**H04N 21/835** (2011.01)

(52) Cooperative Patent Classification (CPC):
**H04N 19/70; G06F 21/64; H04L 9/3236;**
**H04L 9/3247; H04L 63/123; H04N 21/835**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **23.10.2024 EP 24208513**

(71) Applicant: **Fraunhofer-Gesellschaft zur Förderung**
**der angewandten Forschung e.V.**
**80686 München (DE)**

(72) Inventors:
• **PFAFF, Jonathan**
  **10587 Berlin (DE)**
• **HINZ, Tobias**
  **10587 Berlin (DE)**
• **SÜHRING, Karsten**
  **10587 Berlin (DE)**
• **SCHWARZ, Heiko**
  **10587 Berlin (DE)**
• **SKUPIN, Robert**
  **10587 Berlin (DE)**
• **SÁNCHEZ DE LA FUENTE, Yago**
  **10587 Berlin (DE)**
• **HELLGE, Cornelius**
  **10587 Berlin (DE)**
• **SCHIERL, Thomas**
  **10587 Berlin (DE)**
• **MARPE, Detlev**
  **10587 Berlin (DE)**
• **WIEGAND, Thomas**
  **10587 Berlin (DE)**

(74) Representative: **Miller, Bastian et al**
**Schoppe, Zimmermann, Stöckeler**
**Zinkler, Schenk & Partner mbB**
**Radlkoferstraße 2**
**81373 München (DE)**

Remarks:
Claims filed after the date of filing of the application (Rule 68(4) EPC).

(54) **AUTHENTICATION OF SUPPLEMENTAL INFORMATION IN DATA STREAMS**

(57)    Apparatuses and methods for checking a data stream on trustworthiness are described. According to an aspect, the data stream comprises an indication which indicates whether one or more supplemental information messages are to be included into a portion of the data stream, which portion is to be used for performing a trustworthiness check of the data stream.

Fig. 1

**EP 4 734 520 A1**

**Description**

Embodiments of the invention relate to apparatuses and methods for decoding a data steam, which is to be checked on trustworthiness. Further embodiments relate to apparatuses and methods for rendering a data stream checkable on trustworthiness. Further embodiments relate to data streams being checkable on trustworthiness. In particular, embodiments relate to media data stream, such as video data streams or audio data streams, as well as decoders and encoders for decoding or encoding such data streams, respectively.

Content Authentication is crucial to avoid media tampering. Rapid AI advancements have sparked the creation of sophisticated deepfakes, blurring the lines between real and fake content and raising significant cybersecurity and copyright concerns. Therefore, being able to verify the authenticity of the media is becoming crucial nowadays.

Examples of methods to carry out such authentication consist in, or include, providing digital signatures for the media by first hashing a media asset and then signing it with the private key of the content generator so that at the client side, given a public key of the content generator, the client can compare the provided signature with the value of a hash computed based on the received media asset by itself. Should the values coincide, the client can safely assume that the media has not been tampered.

Complex structures of data streams may complicate the authentication of a data stream. This is particularly true in scenarios, in which a data stream is modified or generated by an entity, which, for example, extracts a portion from a data stream, e.g., in a scenario, in which a data stream comprises multiple substreams, or in scenarios, in which an entity combines multiple data streams. If this entity is not the entity that encoded the original data stream, and if recalculation of digital signatures which allow a verification of the data streams, shall be avoided, new solutions are required to allow for a reliable verification of data streams.

It is an objective of embodiments of the present invention to provide a concept for checking data streams on trustworthiness, which concept provides an improve tradeoff between a high adaptability to complex streaming scenarios, a low computational effort and a low bitrate of the required signalling overhead for providing the information required for the authentication.

This objective is achieved by the subject-matter of the independent claims.

Embodiments of the invention relate to a verification of supplemental information messages of a data stream, the supplemental information messages providing supplemental information for payload data carried in payload packets of the data stream. The wording verification of a data stream and the wording checking a data stream on trustworthiness are used in an interchangeable manner in the following, and, for example, relate to a verification that the content of a data stream corresponds to the content as provided by a content provider that signed the content using a certificate. Including supplemental information messages in the verification process of a data stream can in some scenarios have the disadvantage, that an intermediate entity in the transmission chain of a data stream may want to drop some parts of the data stream. For example, an entity might drop supplemental information messages, which are not required for the use case, for which the intermediate entity prepares the data stream. On the other hand, the information carried by the supplemental information messages may affect the content of the decoded data so that an unauthorized amendment of the supplemental information messages may falsify the data, what cannot be recognized, if the supplemental information messages are excluded from the verification process.

Embodiments according to the invention rely on the idea to include an indication into the data stream, which indicates whether one or more supplemental information messages are to be considered for verifying the data stream. Using this indication, the receivers knows whether to include the one or more supplemental information messages into the verification process, so that the receiver can determine a portion of the data stream, on which the verification is to be based, according to the indication. Thus, the indication allows the encoder, which renders the data stream checkable on trustworthiness to select whether the one or more supplemental information messages shall be included in the trustworthiness check. Thus, it can be decided between an improved verification level by including the supplemental information messages into the trustworthiness check or a higher degree of flexibility in verifying supplemental information messages at a later stage, e.g., by an intermediate network entity, without having to recalculate the digital signatures for the verification process.

Embodiments provide an apparatus for decoding a data stream, the data stream comprising a plurality of payload packets carrying payload data, and further comprising supplemental information packets, the supplemental information packets carrying supplemental information messages. The apparatus is configured for: deriving, from the data stream, an indication, which indicates whether one or more supplemental information messages are to be considered for verifying the data stream; determining a predetermined portion of the data stream by, if the indication indicates that the one or more supplemental information messages are to be considered for verifying the data stream, including, into the predetermined portion, the one or more supplemental information messages; obtaining, from an indication in the data stream, a digital signature for verifying the predetermined portion.

Embodiments provide an apparatus for decoding a data stream. The apparatus is configured for checking the data stream on trustworthiness, the data stream comprising a plurality of payload packets carrying payload data, and further comprising supplemental information packets, the supplemental information packets carrying supplemental information messages. The apparatus is configured for: deriving, from the data stream, an indication, which indicates whether supplemental information messages are to be considered for verifying the data stream; determining a predetermined portion of the data stream, which predetermined portion is to be verified, by, if the indication indicates that supplemental information messages are to be considered for verifying the data stream, including, into the predetermined portion, one or more of the supplemental information messages; obtaining a digital signature based on the data stream; checking whether the predetermined portion of the data stream fits to the digital signature.

Embodiments provide an apparatus for encoding a data stream. The apparatus is configured for rendering the data stream checkable on trustworthiness, and encoding, into the data stream, a plurality of payload packets carrying payload data, and further encoding, into the data stream, supplemental information packets, the supplemental information packets carrying supplemental information messages. The apparatus is configured for: inserting, into the data stream, an indication, which indicates whether one or more supplemental information messages are to be considered for verifying the data stream; determining a predetermined portion of the data stream, which predetermined portion is to be rendered checkable on trustworthiness, by, if the indication indicates that the one or more supplemental information messages are to be considered for verifying the data stream, including, into the predetermined portion, one or more of the supplemental information messages; obtaining a digital signature based on the predetermined portion.

Embodiments provide a method for decoding a data stream, the data stream comprising a plurality of payload packets carrying payload data, and further comprising supplemental information packets, the supplemental information packets carrying supplemental information messages, wherein the method comprises: deriving, from the data stream, an indication, which indicates whether one or more supplemental information messages are to be considered for verifying the data stream; determining a predetermined portion of the data stream by, if the indication indicates that the one or more supplemental information messages are to be considered for verifying the data stream, including, into the predetermined portion, the one or more supplemental information messages; obtaining, from an indication in the data stream, a digital signature for verifying the predetermined portion.

Embodiments provide a method for decoding a data stream, wherein the method comprises checking the data stream on trustworthiness, the data stream comprising a plurality of payload packets carrying payload data, and further comprising supplemental information packets, the supplemental information packets carrying supplemental information messages, wherein the method comprises: deriving, from the data stream, an indication, which indicates whether supplemental information messages are to be considered for verifying the data stream; determining a predetermined portion of the data stream, which predetermined portion is to be verified, by, if the indication indicates that supplemental information messages are to be considered for verifying the data stream, including, into the predetermined portion, one or more of the supplemental information messages; obtaining a digital signature based on the data stream; checking whether the predetermined portion of the data stream fits to the digital signature.

Embodiments provide a method for encoding a data stream, wherein the method comprises rendering the data stream checkable on trustworthiness, and encoding, into the data stream, a plurality of payload packets carrying payload data, and further encoding, into the data stream, supplemental information packets, the supplemental information packets carrying supplemental information messages, wherein the method comprises: inserting, into the data stream, an indication, which indicates whether one or more supplemental information messages are to be considered for verifying the data stream; determining a predetermined portion of the data stream, which predetermined portion is to be rendered checkable on trustworthiness, by, if the indication indicates that the one or more supplemental information messages are to be considered for verifying the data stream, including, into the predetermined portion, one or more of the supplemental information messages; obtaining a digital signature based on the predetermined portion (e.g., and inserting the digital signature into the data stream).

Embodiments provide a data stream having a data signal encoded thereinto, the data stream being checkable on trustworthiness, the data stream comprising: a plurality of payload packets carrying payload data, and further comprising supplemental information packets, the supplemental information packets carrying supplemental information messages; and an indication, which indicates whether one or more supplemental information messages are to be considered for trustworthiness of the data stream.

Advantageous implementations are defined by the subject-matter of the dependent claims.

Embodiments of the present disclosure are described in more detail below with respect to the figures, among which:

Fig. 1        illustrates an apparatus of decoding a data stream according to an embodiment;

Fig. 2        illustrates a verification module according to an embodiment,

Fig. 3        illustrates an apparatus for encoding a data stream according to an embodiment,

Fig. 4    illustrates an apparatus for decoding a data stream according to an embodiment of the first aspect;

Fig. 5    illustrates an apparatus for decoding a data stream with type-wise indication of supplemental information messages to be verified according to an embodiment of the first aspect;

Fig. 6    illustrates an apparatus for decoding a data stream with individual indication of supplemental information messages to be verified according to an embodiment of the first aspect;

Fig. 7    illustrates a substream wise verification of a segment of a data stream according to an embodiment;

Fig. 8    illustrates a video encoder according to an embodiment;

Fig. 9    illustrates a video decoder according to an embodiment;

Fig. 10    illustrates subdivisions of a picture according to an embodiment.

Embodiments of the present invention are now described in more detail with reference to the accompanying drawings, in which the same or similar elements or elements that have the same or similar functionality have the same reference signs assigned or are identified with the same name. **In** the following description, a plurality of details is set forth to provide a thorough explanation of embodiments of the disclosure. However, it will be apparent to one skilled in the art that other embodiments may be implemented without these specific details. In addition, features of the different embodiments described herein may be combined with each other, unless specifically noted otherwise.

In the following description, when referred to a data stream, embodiments of the invention include the data stream being a media data stream having a media signal encoded there into, for example, a video data stream having a video encoded there into or an audio data stream having an audio signal encoded thereinto. In general, embodiments of the invention may be employed for any sequentially signaled data stream, e.g., a data stream having a sampled signal e.g., a sampled measurement signal encoded thereinto. According to an embodiment, the data stream has a waveform signal encoded thereinto, e.g., a biomedical waveform signal. Although some aspects of the invention will be described below with respect to a video data stream, these aspects may be applied to other types of data streams in an equivalent manner, unless explicitly indicated differently.

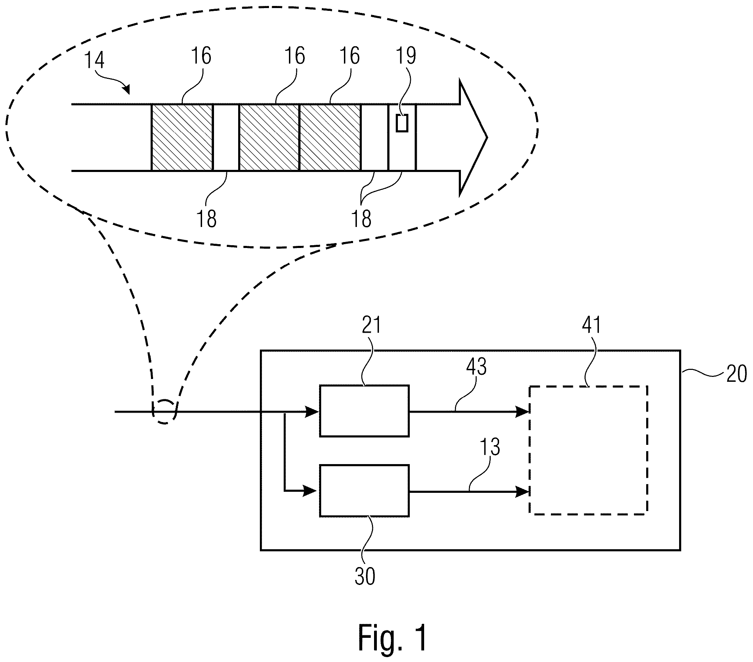

Fig. 1 illustrates an apparatus 20 for decoding a data stream 14. Apparatus 20 may be referred to as a decoder 20. Data stream 14 may be a media data stream, e.g., a video data stream or an audio data stream, or any of the data stream types named above. For example, decoder 20 may decode a media signal, e.g., a video, or an audio signal, from the data stream 14. Decoder 20 comprises an extractor 21. Extractor 21 obtains a digital signature 43 based on the data stream 14. According to an embodiment, extractor 21 derives the digital signature 43 from the data stream 14. In other words, the digital signature 43 may be included in data stream 14. According to an alternative embodiment, data stream 14 includes an indication of a resource comprising the digital signature 43, and extractor 21 uses the indication of the resource for obtaining the digital signature 43 from the resource indicated in the data stream 14.

For example, the digital signature 43 is for checking the data stream on trustworthiness. In other words, the digital signature 43 may be for verifying the data stream 14, e.g., for verifying the trustworthiness of data stream 14.

Decoder 20 further comprises a portion determinator 30, which is configured for determining a predetermined portion 13 of the data stream 14, on which the checking of the data stream 14 on trustworthiness also referred to as trustworthiness check in the following, is to be performed. The digital signature 43 may be associated with the predetermined portion. In other words, the digital signature 43 may be for verifying the predetermined portion 13.

For example, the verification, or checking on trustworthiness, of data stream 14 may be performed portion wise, i.e., in units of portions of the data stream 14. Thus, the digital signature 43 may be for checking a portion of the data stream on trustworthiness, or in other words, for verifying a portion of the data stream 14.

The trustworthiness check, i.e., the checking of the data stream 14 or the predetermined portion 13 on trustworthiness, comprises checking whether the predetermined portion of the data stream 14 fits to, or matches, the digital signature 43.

According to an embodiment, decoder 20 comprises a verification module 41, which is configured for performing the trustworthiness check. As illustrated in Fig. 1, the verification module 41 receives the digital signature 43 and the predetermined portion 13 to perform the trustworthiness check. The verification module 41 is, as indicated in Fig. 1 by the dashed lines, an optional feature of apparatus 20.

In other words, according to an embodiment, decoder 20 is configured for checking the predetermined portion 13 of the data stream 14 on trustworthiness. In yet other words, according to an embodiment, decoder 20 is configured for checking whether the predetermined portion 13 of the data stream 14 fits to, or matches, the digital signature.

As already mentioned, the verification module 41 is optional in apparatus 20. According to an alternative embodiment, the trustworthiness check may be performed externally with respect to decoder 20. In other words, verification module 41 is not necessarily part of decoder 20, but may be part of a separate entity, such as an apparatus for checking the trustworthiness of data stream 14. For example, in this case, decoder 20 may provide or forward the digital signature 43 and the predetermined portion 13 to the trustworthiness check. For example, decoder 20 may gather information for the trustworthiness check, such as the digital signature 43 and the predetermined portion 13 and provide the gathered information for the trustworthiness check. For example, decoder 20 may form a concatenation of the information for the trustworthiness check. These alternative embodiments, in which the verification module 41 is not part of apparatus 20, may be embodied in combination with all embodiments of all aspects of the invention.

Further optional features of apparatus 20 of Fig. 1, which may apply to all embodiments described herein, are described in the following.

For example, the data stream 14 may comprise a plurality of packets. Portion determinator 30 may determine the predetermined portion 13 in a packet-wise manner, e.g., by including one or more of a plurality of packets.

For example, optionally, data stream 14 may comprise a plurality of payload packets 16. The payload packets 16 may carry payload data, e.g., the data to be transmitted by data stream 14. For example, in case that the data stream 14 is a media data stream, the payload packets 16 may carry coded media data, such as video data in the case that the data stream 14 is a video data stream. In other words, payload packets 16 may be coded video payload packets, e.g., video coded layer (VCL), network abstraction layer (NAL) units, carrying video data, e.g., encoded video data. For example, video data may refer to information, from which sample values of pictures of a video are reconstructed.

Data stream 16 may, optionally, further comprise supplemental information packets 18, which may alternatively be referred to as supplemental information payload packets, e.g., in contrast to coded data payload packets carrying the coded data. For example, in case of video data streams, in particular, in case of H.264, H.265, and H.266 can format video data streams, the supplemental information packets may be supplemental enhancement information (SEI) NAL units. For example, the supplemental information packets 18 are interspersed between the payload packets 16. The supplemental information packets 18 carry supplemental information messages 19. For example, the supplemental information messages 19 comprise information that assists in processes related to decoding, display or other purposes, but is not needed by the decoding process in order to determine the values of the samples in decoded pictures of a video.

In other words, for example, the supplemental information packets may carry information on coding options and information for the decoding process, but do not include encoded samples of the signal encoded into the data stream.

For example, each of the supplemental information messages may be associated with one of the payload packets.

For example, each of the supplemental information messages is associated with an associated one of the payload packets, e.g., the associated payload packet being part of the same sample of a sampled signal encoded into the data stream, e.g., of the same picture unit or the same access unit as the supplemental information packet.

As it will be described below with respect to embodiments of the first, fourth and fifth aspect, the predetermined portion 13 may optionally comprise one or more supplemental information messages, which may be included in one or more supplemental information packages. In other words, optionally, the predetermined portion 13 may comprise one or more supplemental information packets.

For example, the predetermined portion 13 comprises all or a subset of the payload packets 16 of a segment of the data stream 14. For example, the predetermined portion 13 may include portions of the payload packets 16, e.g., a portion of each of the payload packets, which is to be included in the predetermined portion, or alternatively, may include the payload packets as their holes. The segment of data stream 14, from which the predetermined portion 13 may be determined, may be, for example, an independently coded sequence of the data stream 14, for example, a coded video sequence, CVS in case of a video data stream. In other examples, the segment, from which the predetermined portion 13 is determined, may be indicated in the data stream 14, e.g., by means of one or more indications, which associate packets of the data stream with the predetermined portion 13 and/or by indications, such as supplemental information messages, which indicate start and end of the segment, out of which the predetermined portion 13 is selected. For example, start and end may be indicated by respective supplemental information messages.

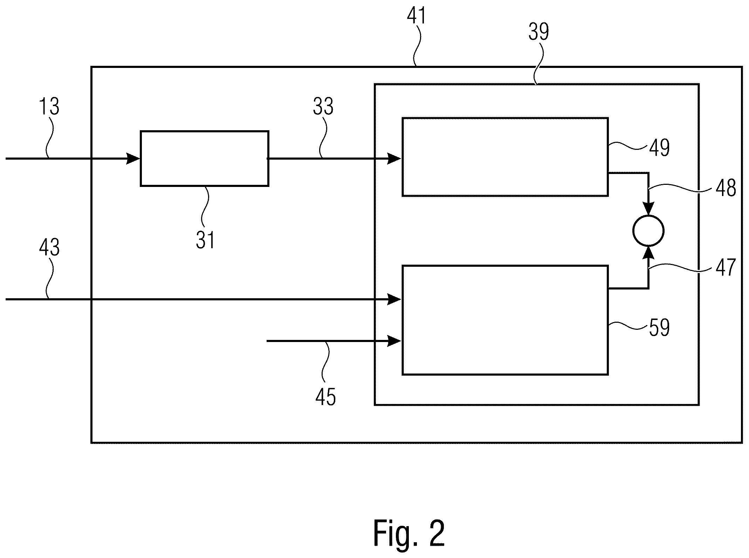

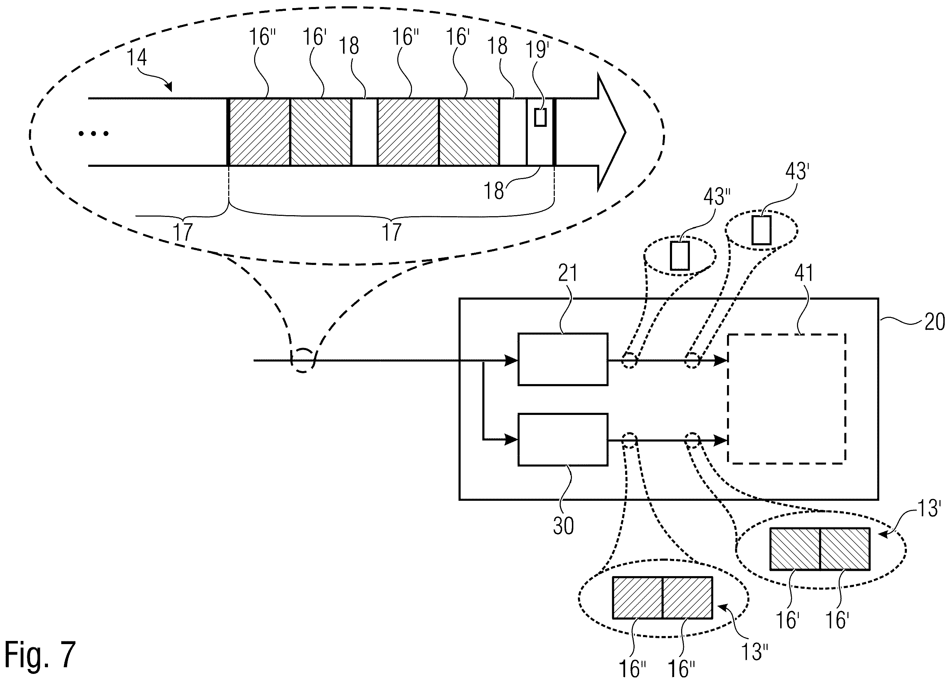

According to embodiments, data stream 14 may comprise, for the predetermined portion 13, or for a segment of data stream 14, which comprises the predetermined portion, e.g., a segment 17 described with respect to Fig. 7, a verification parameter set, which comprises verification parameters for verifying the predetermined portion. For example, the verification parameter set may may be indicative of one or more of a hash function for performing the trustworthiness check of the predetermined portion 13 (e.g., hash function 31 described with respect to Fig. 2), a certificate for decrypting the digital signature 43 for performing the trustworthiness check of the predetermined portion 13, an identifier, which associates the predetermined portion to a media asset, an indication of how to derive the predetermined portion 13. The verification parameter set may be signaled in a supplemental information message, which, for example, may corresponds to the DSC ISCI message described below. For example, indication 51 may be included in the verification parameter set.

Fig. 2 illustrates an embodiment of the verification module 41, as it may optionally be part of decoder 20. Alternatively, the trustworthiness check described with respect to a verification module 41 may be performed externally to decoder 20. According to the embodiment of Fig. 2, the trustworthiness check, or the checking whether the predetermined portion 13 of the data stream 14 fits to the digital signature 43, comprises subjecting the predetermined portion 13 to a hash function 31 to obtain a hash value 33. According to this embodiment, verification module 41 further comprises a verification block 39, which checks whether the hash value 33 fits to the digital signature 43.

In the following, further optional features of the verification module 41 are described.

According to an embodiment, verification block 39 comprises a verification string former 49, which is configured for forming a verification string 48, e.g., IdString of the sample syntax described below, based on the hash value 33. For example, verification string former 49 may form a concatenation comprising the hash value 33, and optionally, further information, such as one or more of a media asset identifier, identifying a media asset, to which the media of the predetermined portion 13 belongs, and identifier of an algorithm of the hash function 31, and a further hash value, for example, obtained from a previous portion of the data stream 14. According to this embodiment, verification block 39 comprises a decryption block 59, which decrypts the digital signature 43 to obtain a check value 47, and verification block 39 checks whether the verification string 48 matches the check value 47.

For example, decryption module 59 may use a public key 45 of an asymmetric cryptography scheme for decrypting the digital signature 43. For example, extractor 21 may derive the public key 45 based on an indication in data stream 14, for example, a resource identifier, which indicates a resource, from which the public key 45 may be derived, and deriving the public key 45 from the resource indicated in data stream 14.

**In** other words, according to an embodiment, verification block 39 performs the checking whether the hash value 33 fits to the digital signature 43 by forming a verification string based on the hash value and, optionally, based on further information, and comparing the verification string to the digital signature 43 using a public key (wherein comparing the verification string to the digital signature may include the decrypting performed by decrypting block 59).

According to alternative embodiments, all or a part of the above-mentioned further information, which is used for deriving the verification string 48, may be concatenated with the predetermined portion 13 and subjected to the hash function 31 to obtain the hash value 31. **In** other words, according to these alternative embodiments, all or a part of the further information, e.g., the hash function identifier and/or the further hash value or digital signature of a previous segment or previous portion, is used for deriving the verificaiton string, and is thus reflected in the verification string, by hashing this information together with the predetermined portion 13, and thus, deriving the hash value 33 based on this information.

For example, the generation of the digital signature 43 may be performed on encoder side by forming a verification string and signing it using a private key of an asymmetric encryption scheme.

For example, the singing may include a further hashing, i.e., hashing the verification string using a further hash function to obtain a further hash value and signing the further hash value. In this example, it may be impossible to reconstruct the verification string from the digital signature 43 on decoder side, but instead, it can only be checked, if a check value formed using the hash value 33 fits to the digital signature, e.g., by deriving the check value by forming the verification string and hashing the verification string using the further hash function. In other words, in this case, the verification by verification block 39 may include a hashing of the verification string using the further hash function to obtain a further hash value, and checking, if the further hash value fits to the digital signature, e.g., by decrypting the digital signature using the public key and checking if the resulting check value equals the further hash value.

In other words, according to an embodiment, the checking whether the hash value 33 fits or matches the check value 47 may include forming a verification string using the hash value 33, e.g., by concatenating the hash value 33 with further information, such as a further hash value or a hash function identifier as will be described below, and hashing the verification string, e.g., using a further hash function. Verification block 39 may then check, whether the hashed verification string equals the check value 47 decrypted from the digital signature. On encoder side, according to this embodiment, the digital signature may be generated by forming the verification string as on decoder side, hashing it using the further hash function, and signing the hashed verification string to obtain the digital signature 43.

According to alternative embodiments, the check value 47 may correspond to the verification string, e.g., the hash value 33 or the concatenation of the hash value 33 with further information, such as a further hash value or a hash function identifier. In other words, the decryption of the digital signature in this case may yield the hash value 33 as part of the check value 47 (or the entire check value 47). In this case, due to the omittance of a further hashing, the digital signature may be larger.

For example, if one or the other of the above alternatives is employed may depend on the selected hash function.

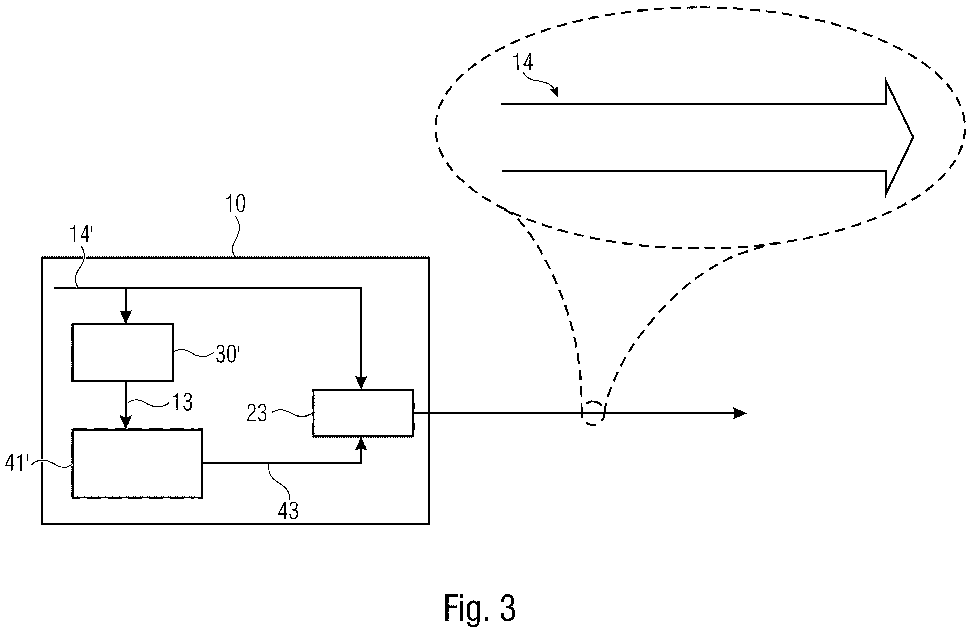

Fig. 3 illustrates an apparatus 10 for encoding a data stream 14. Apparatus 10 may be referred to as encoder 10. Apparatus 10 is configured for rendering the data stream 14 checkable on trustworthiness. Encoder 10 provides data stream 14 by inserting, e.g., encoding, into the data stream 14, a plurality of payload packets 60 carrying payload data and supplemental information packets 18 carrying supplemental information messages 90. In other words, encoder 10 may provide the data steam 14 as described with respect to Fig. 1. For example, encoder 10 comprises inserter 23, which inserts the payload packets and the supplemental information packets into data stream 14.

Encoder 10 comprises a verification module 41', which obtains a digital signature 43 based on a predetermined portion of the data stream 14. Encoder 10 further comprises a portion determinator 30', which determines the predetermined portion 13. For example, portion determinator 30' determines, based on data 14', which is to be inserted into data stream 14, the predetermined portion 13, e.g., by including a portion of data 14' into the predetermined portion 13, which corresponds to the predetermined portion 13 determined by portion determinator 30.

Any description of apparatus 20 may optionally apply to encoder 10 in the sense that an information derived from data stream 14 by apparatus 20 may be inserted into data stream 14 by apparatus 10. Furthermore, for example, any hash function used by verification module 41 such as hash function 31, may be equivalent to a corresponding hash function used by the verification module 41'. Same applies to the input of corresponding hash functions, such as hash function 31 used for deriving the hash value 33.

The interplay between verification module of decoder 20 and verification module 41' of encoder 10 was already briefly described above. Verification module 41' may for a verification string comprising a hash value derived by subjecting the predetermined portion 13 to a hash function. Verification module 41' may further sign the verification string, e.g., using a private key of the above-mentioned asymmetric cryptography scheme in order to generate the digital signature 43.

For example, the digital signature 43 may be inserted into data stream 14 by inserter 23, alternatively, inserter 23 may insert an indication of a resource, from which the digital signature 43 may be derived, into the data stream 14.

Any description of apparatus 20 may optionally equivalently apply to apparatus 10 in the sense that an information derived from data stream 14 by apparatus 20 may be inserted into data stream 14 by apparatus 10. Furthermore, any hash function such as hash function 31, used by apparatus 10 may be equivalent to the corresponding hash function used by apparatus 20. Same applies to the input of the corresponding hash functions, such as hash function 31 used for deriving hash value 33. The generation of digital signature 43 and the verification performed by apparatus 20 using the digital signature 43, respectively, may be part of an asymmetric cryptography scheme, and these steps may be performed by means of a pair of private and public keys, respectively, wherein at least the private key is used for signing to generate a digital signature 43, and wherein the public key is used for decrypting, in order to verify the verification string formed on receiver side against the digital signature 43.

In the following, embodiments of the invention are described.

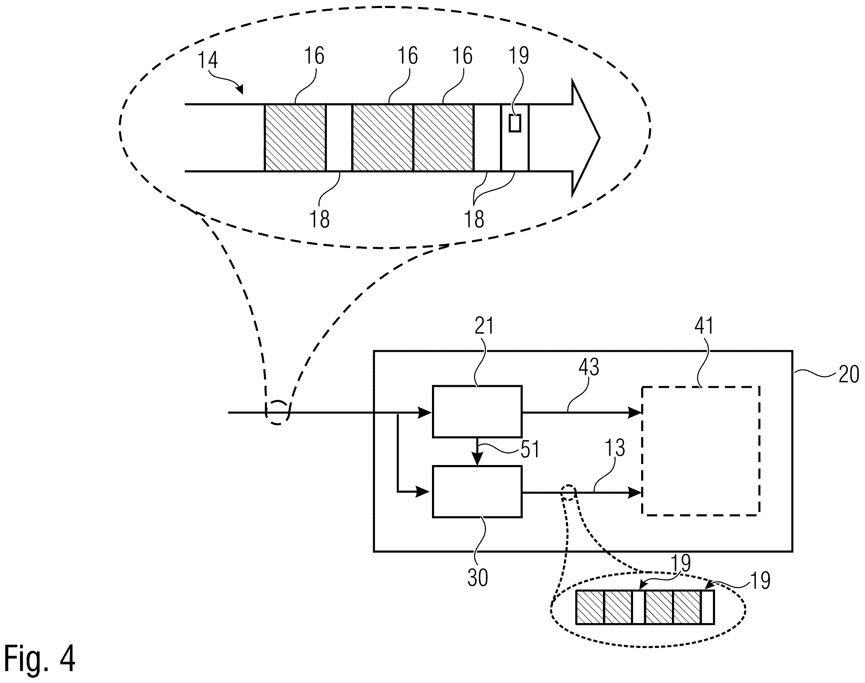

Fig. 4 illustrates an apparatus 20 for decoding a data stream 14 according to an embodiment of the invention. Apparatus 20 of Fig. 4 may optionally correspond to decoder 20 of Fig. 1, that is, decoder 20 of Fig. 4 may be based on any of the embodiments described with respect to Fig. 1. Furthermore, embodiments described below may optionally be combined with any of the embodiments described with respect to Figs. 1 to 3.

According to embodiments of the invention, extractor 21 is configured for deriving, from data stream 14, an indication 51, which indicates whether one or more supplemental information messages are to be considered, or to be used, or to be included, for verifying the data stream 14, e.g., for checking the data stream on trustworthiness. According to embodiments of the first aspect, portion determinator 30 determines the predetermined portion 13 by including, into the predetermined portion 13, the one or more supplemental information messages, if the indication 51 indicates the one or more supplemental information messages are to be considered for verifying the data stream 14. The one or more supplemental information messages, to which the indication 51 refers, i.e., for which the indication 51 indicates, whether to include the supplemental information messages to the predetermined portion 13, may be referred to as verification set of supplemental information messages.

It is noted that the final decision of including or excluding a supplemental information message or packet into the predetermined portion may depend on one or more further criterions, e.g., as will be described with respect to the fourth aspect. In other words, indication 51 may be one of a plurality of criterions of whether or not to include a supplemental information message into the predetermined portion 13.

In other words, an embodiment of the invention is an apparatus 20 for decoding a data stream 14 (e.g., apparatus for decoding a media signal from a media data stream), the data stream comprising a plurality of payload packets 16 (e.g., VCL NAL units) carrying payload data (e.g., media data, e.g., video data) (e.g., encoded video data; e.g., the video data is information from which sample values of pictures of the video are reconstructed), and further comprising supplemental information packets 18 (e.g., supplemental information payload packets)(e.g., SEI NAL units) (e.g., being interspersed between the payload packets), the supplemental information packets carrying supplemental information messages 19 (e.g., comprising information that assists in processes related to decoding, display or other purposes but is not needed by the decoding process in order to determine the values of the samples in decoded pictures), wherein the apparatus is configured for: deriving 21, from the data stream, an indication 51 (e.g., a syntax element, e.g., dsci_sei_messages_digitally_signed_flag), which indicates whether one or more supplemental information messages are to be considered (or used or included) for verifying 40 the data stream (e.g., verifying the trustworthiness of the data stream; in other words, checking the data stream on trustworthiness) (or, e.g., whether no supplemental information are to be considered for authenticating the predetermined portion 13); determining 30 a predetermined portion 13 of the data stream (e.g., which predetermined portion is to be verified or checked on trustworthiness) by, if the indication 51 indicates that the one or more supplemental information messages are to be considered for verifying the data stream, including, into the predetermined portion, the one or more supplemental information messages; obtaining 21, from an indication in the data stream, a digital signature 43 for verifying the predetermined portion 13 (e.g., using information derived from the data stream, e.g., deriving the digital signature from the data stream or deriving the digital signature from a source indicated in the data stream) (E.g., the digital signature is derived based on the predetermined portion).

According to an embodiment, the apparatus is configured for verifying the predetermined portion by checking whether the predetermined portion of the data stream fits to (or matches) the digital signature (e.g., in order to check the data stream, or the predetermined portion thereof, on trustworthiness).

According to an embodiment, the apparatus is configured for providing (or forwarding) the predetermined portion and the digital signature for a verification of the predetermined portion (e.g., performed by a further apparatus or entity) (E.g., the verification comprises checking whether the predetermined portion of the data stream fits to (or matches) the digital signature).

In other words, an embodiment of the invention described with respect to Fig. 4 is an apparatus 20 for decoding a data stream 14 (e.g., apparatus for decoding a media signal from a media data stream), wherein the apparatus is configured for checking the data stream on trustworthiness (e.g., apparatus for verifying a data stream), the data stream comprising a plurality of payload packets 16 (e.g., carrying coded payload data) (e.g., VCL NAL units) carrying payload data (e.g., encoded video data; e.g., the data is information from which sample values of pictures of the are reconstructed), and further comprising supplemental information packets 18 (e.g., supplemental information payload packets) (e.g., SEI NAL units) (e.g., being interspersed between the payload packets), the supplemental information packets carrying supplemental information messages 19 (e.g., comprising information that assists in processes related to decoding, display or other purposes but is not needed by the decoding process in order to determine the values of the samples in decoded pictures), wherein the apparatus is configured for: deriving 21, from the data stream, an indication 51 (e.g., a syntax element, e.g., dsci_sei_messages_digitally_signed_flag), which indicates whether supplemental information messages (e.g., one or more supplemental information messages) are to be considered (or used or included) for verifying the data stream (or checking the data stream on trustworthiness) (or whether no supplemental information are to be considered for authenticating the predetermined portion); determining 30 a predetermined portion 13 of the data stream, which predetermined portion is to be verified (or checked on trustworthiness), by, if the indication 51 indicates that supplemental information messages are to be considered for verifying the data stream, including, into the predetermined portion 13, one or more of the supplemental information messages 19; obtaining a digital signature 43 based on the data stream 14 (e.g., using information derived from the data stream, e.g., deriving the digital signature from the data stream or deriving the digital signature from a source indicated in the data stream); checking 41 whether the predetermined portion 13 of the data stream fits to (or matches) the digital signature 43.

Further optional feature of embodiments will be described in the following.

According to an embodiment, the verification set of supplemental information messages includes a subset of all supplemental information messages of data stream 14. In other words, indication 51 may indicate, whether the supplemental information messages belonging to the verification set are to be included or to be excluded from the predetermined portion 13.

In other words, according to an embodiment, indication 51 indicates whether supplemental information messages belonging to the verification set of supplemental information messages are to be included in the predetermined portion 13, or are to be excluded from the predetermined portion 13. For example, optionally, the data stream may comprise further supplemental information messages, not belonging to the verification set, which are always to be included in the verification, i.e., in the predetermined portion.

According to an embodiment, the indication 51 indicates whether the one or more supplemental information messages are to be considered, or to be included, into the predetermined portion 13 or whether no supplemental information messages are to be considered for verifying the data stream, e.g., are to be included into the predetermined portion 13. In other words, indication 51 may differentiate between considering the verification set for being included in the predetermined portion and not including any supplemental information message, e.g., any of a segment, to which the digital signature 43 refers, into the predetermined portion. In yet other words, the indication 51 indicates whether supplemental information messages, namely those of the verification set, are to be included in the predetermined portion 13 or to be excluded from the predetermined portion 13, i.e., whether supplemental information messages are to be considered for verifying the data stream, or whether no supplemental information messages, e.g., no supplemental information messages at all, are to be considered for verifying the data stream, or the predetermined portion.

The verification set may include all supplemental information messages of a segment of the data stream, to which the digital signature 43 refers, or a portion thereof. In the latter case, the verification set may be predefined, e.g. by means of message types, or may be signaled in the data stream 14, e.g., by indicating message types to be included or excluded, or by identifying the messages, or the packets including the respective messages, individually. More optional details as will be described in the following in more detail.

The verification set of supplemental information messages may be defined by supplemental information message types, or by individually identifying supplemental information messages to be included in the verification set of supplemental information messages, or packet-wise, or by any combination of these criteria. According to the packet wise selection, entire supplemental information packets may be included or excluded from the predetermined portion, e.g.,

by individually identifying packets to be included or excluded into the predetermined portion, or by packet type. In other words, in the packet wise selection, all supplemental information messages included in a selected supplemental information packet are included in the verification set of supplemental information messages.

According to an embodiment, portion determinator 30 determines the predetermined portion 13 by including, into the predetermined portion 13, one or more of the supplemental information packets, if the indication 51 indicates that the one or more supplemental information messages are to be considered for verifying the predetermined portion 13.

**In** other words, inclusion of supplemental information messages into the predetermined portion 13 may be performed packet wise, that is, the one or more supplemental information messages to be considered for varying the predetermined portion 13 may be identified or indicated by identifying or indicating one or more of the supplemental information packets of data stream 14, which are to be included into the predetermined portion 13.

For example, according to an embodiment, portion determinator 30 may include, into the predetermined portion 13, all of the supplemental information packets 18, which carry any supplemental information message to be included into the predetermined portion 13, e.g., any of the one or more supplemental information messages of the verification set.

According to an embodiment, portion determinator 30 conditions a decision whether or not to include a supplemental information packet of the supplemental information packets in the predetermined portion 13 on a result of checking whether the supplemental information packet comprises a supplemental information message of any supplemental message type out of a set of supplemental message types.

**In** other words, identification of supplemental information messages belonging to the verification set may be performed based on supplemental information message types by including certain types of supplemental information messages. In addition, inclusion or exclusion of supplemental information messages may be performed packet wise by including each supplemental information packet, which comprises at least one supplemental information message of one of the set of supplemental information message types.

According to an embodiment, the indication 51 is a flag having a first state and a second state. According to this embodiment, the portion determinator determines the predetermined portion 13 of data stream 14 by determining the one or more supplemental information messages to be included in the predetermined portion 13 based on a predefined set of supplemental information messages, if the flag has the first state, and refraining from including any of the supplemental information message of the predefined set, in the predetermined portion, if the flag has the second state. For example, if the flag has the first state, portion determinator 30 may include all supplemental information messages of the predefined set or may include at least one instance of all supplemental information message of the predefined set, as will be described in more detail below.

For example, indication 51 may be a flag having only the first state and the second state. In other words, indication 51 may be binary.

According to an embodiment, the predefined set of supplemental information messages comprises all supplemental information message of the supplemental information packets referring to the plurality of payload packets.

According to another embodiment, the predefined set of supplemental information messages comprises all supplemental information messages of any type out of a set of types of supplemental information messages. For example, the set of types of supplemental information messages is a subset of a plurality of types of supplemental information messages, e.g., a plurality of possible types of supplemental information messages, which may be defined in dependence on a type of the data stream 14. For example, the set of types of supplemental information messages may be predefined. That is, for example the set of types of supplemental information messages may be known to decoder 20, e.g., without the need of being transmitted in data stream 14.

According to an embodiment, identification of the one or more supplemental information messages to be included in the predetermined portion is signaled in the data stream 14. If the indication 51 indicates that the one more supplemental information messages are to be considered for verifying the data stream.

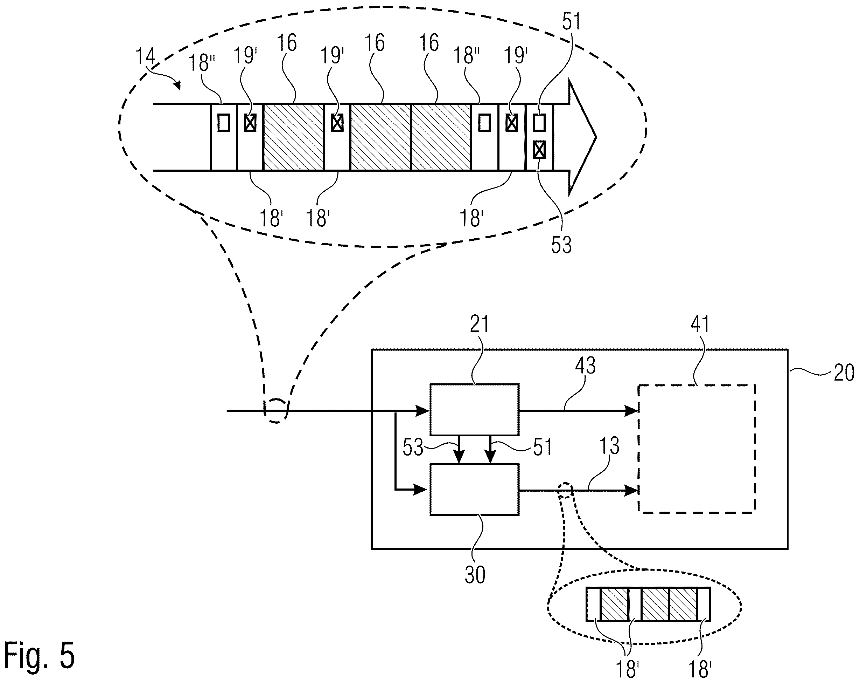

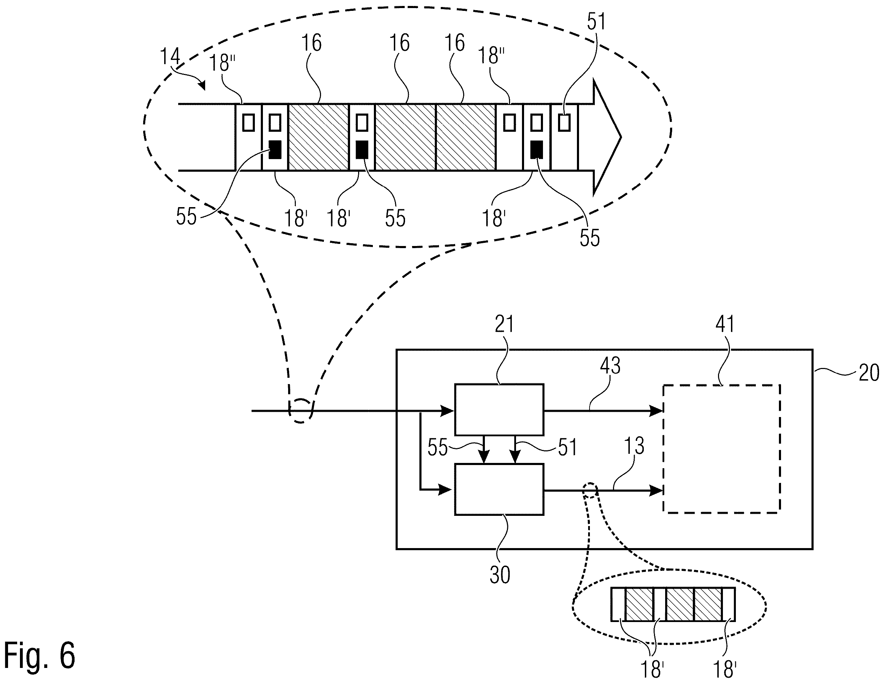

In the following, embodiments of how to identify the verification set of supplemental messages in data stream 14 will described with respect to Fig. 5 and Fig. 6.

Fig. 5 illustrates an embodiment of decoder 20 according to the invention. For example, decoder 20 of Fig. 5 may be an embodiment of decoder 20 of Fig. 1, that is, any of the previously described details may optionally apply to decoder 20 of Fig. 5. According to Fig. 5, data stream 14 comprises a syntax element 53, which identifies a set of types of supplemental information messages to be included in the predetermined portion 13. In other words, according to this embodiment, verification set may be identified in terms of supplemental information message types. For example, in the illustrative example of Fig. 5 supplemental information packets 18' comprise supplemental information messages 19' of a type indicated by syntax element 53. According to this embodiment, extractor 21 derives syntax element 53 from data stream 14. The information of syntax element 53 may be used by portion determinator 30 for determining the predetermined portion 13 in that supplemental information messages of a type included in the set of types of supplemental information messages indicated by syntax element 53 are included in the predetermined portion 13, or in that supplemental information packets including supplemental information messages, which are of a type included in the set of types of supplemental information messages indicated be a syntax element 53, are included in the predetermined portion 13, as it is illustrated in Fig. 5.

It is noted that in embodiments, in which a supplemental information packet incudes only one supplemental information message, the type of the supplemental information message may be considered as type of the supplemental information packet. In other words, there is not necessarily a differentiation between supplemental information message types and supplemental information packet types, but types of supplemental information packets may be considered equal to the type of the supplemental information message carried in the respective supplemental information packet.

According to an embodiment, the syntax element 53 is signaled in a supplemental information message, for example, in a supplemental information message, which will be referred to as verification parameter message in the following. For example, the verification parameter message carries the above-described verification parameter set. For example, the supplemental information message carrying syntax element 53 may be included in a supplemental information packet.

According to an embodiment, indication 51 and syntax element 53 are include in the same supplemental information message, e.g., the verification parameter message.

According to an embodiment, indication 51 is signaled by the syntax element 53, for example, by a predetermined state of the syntax element 53.

For example, according to embodiment, syntax element 53 has a plurality of first states and a second state. According to each of the first states, one or more supplemental information messages are to be included in the predetermined portion 13, wherein the first states differentiate between different verification sets. In other words, the first states identify the supplemental information messages to be included in the predetermined portion. In other words, each of the first states indicates a not necessarily proper subset of the one or more supplemental information messages, which are to be included in the predetermined portion 13. According to the second state, none of the one or more supplemental information messages is to be included in the predetermined portion 13.

Thus, according to an embodiment, portion determinator 13 determines the one or more supplemental information messages to be included in the predetermined portion 13 in dependence on the state of the syntax element 53 if the syntax element 53 has one of the first states. **If** the syntax element has the second state, portion determinator 30 refrains from including any of the one or more supplemental information messages in the predetermined portion 13.

According to an embodiment, if the indication 51 indicates that one or more supplemental information messages are to be included in the predetermined portion 13, extractor 21 derives from data stream 14, a first syntax element (e.g., dsci_num_sei_message_types_digitally_signed_minus1 described below) indicating a count of supplemental information message types to be considered for the predetermined portion 13 and further derives, from data stream 14, a respective number of second syntax elements, each of which identifies a respective supplemental information message type to be included in the predetermined portion 13. For example, the respective number of second syntax elements ([e.g., dsci_digitally_signed_sei_type[ i ]] described below) corresponds to the count indicated by the first syntax element. In other words for example, the verification set may be indicated in terms of supplemental information message types, the size of the verification set being variable and being signaled in data stream 14. Thus, the number of supplemental information messages to be included in the predetermined portion can be set by the encoder adaptively.

For example, supplemental information message types, which might be dropped during processing the data stream, such as by a file parser, or an entity extracting a substream from a data stream, might be excluded from the trustworthiness check to avoid that the digital signature needs to be recalculated. On the other hand, supplemental information messages may include information, which effects the output of the decoded data stream, so that verification may be desirable. Allowing a variable size of the verification set, with the individual types to be included or excluded from the verification set, allows the decoder to adapt the tradeoff between these aspects individually for the data stream. At the same time, the indication in terms of supplemental information message types provides for a group-wise identification of supplemental information messages to be included in the predetermined portion, thereby avoiding a supplemental information message-wise identification of the verification set.

According to an embodiment, the first syntax element and the second syntax element may be signaled in the verification parameter message mentioned above, for example, together with the indication 51.

Fig. 6 illustrates a further embodiment of decoder 20. Decoder 20 of Fig. 6 may optionally be an example of decoder 20 of Fig. 1 or Fig. 4. According to an embodiment of Fig. 6, portion determinator 30 conditions a decision whether or not to include a supplemental information payload packet of the supplemental information payload packets 18 in the predetermined portion 13 on the result of checking whether the supplemental information payload packet comprises a supplemental information message (e.g., as a prefix to a further supplemental information message, e.g., a further supplemental information message within the same packet), which indicates to include the supplemental information payload packet in the predetermined portion 13. For example, in Fig. 6, each of the payload packets 18' includes a supplemental information message 55, which indicates to include the respective supplemental information packet 18' in a predetermined portion 13, while supplemental information packets 18" does not include such an indication.

It is noted that optionally, portion determinator 30 may condition the decision whether or not to include a supplemental information packet 18' in the predetermined portion 13 on one or more further conditions. Yet in other words, according to an embodiment, supplemental information packet 18', for which indication 55 indicates to include the packet in the predetermined portion 13 is not necessarily included in the predetermined portion 13, but decision may depend on further conditions. For example, in case of repetitions of supplemental information messages, merely one instance of each of the messages might be included in the predetermined portion.

Alternatively, according to an embodiment, portion determinator 30 includes a supplemental information packet 18', which comprises a supplemental information message 55, which indicates to include the supplemental information packet in the predetermined portion.

A further condition, one which the decision of portion determinator 30 on whether to include or exclude a supplemental information packet in the predetermined portion 30 may be, whether the respective supplemental information packet belongs to a set of predetermined supplemental information packets, which are always, or never, to be included in the predetermined portion 13.

Thus, according to an embodiment, if a supplemental information packet does not comprise a supplemental information message 55, which indicates to include the supplemental information packet in the predetermined portion, portion determinator 30 excludes the respective supplemental information packet if it belongs to the predetermined set of supplemental information messages and excludes the respective supplemental information packet if it does not belong to the predetermined set of supplemental information packets. **It** is noted that the decision may optionally depend on further conditions such as the already-mentioned dependency on repetitions.

For example, the supplemental information message 55 may be a prefix supplemental information message which precedes all supplemental information messages within the supplemental information packet or may be a further supplemental information message.

In the following, the description of decoder 20 of Fig. 4 is continued with describing further alternatives of indicating the verification set.

According to an embodiment, the decision whether or not to include a supplemental information packet in the predetermined portion 13 is conditioned on a result of checking whether the supplemental information packet is preceded by a prefix supplemental information packet which indicates to include the following, e.g., the immediately following supplemental information packet in the predetermined portion 13. In other words, compared to the embodiment described with respect to Fig. 6, instead of supplemental information message 55, a prefix supplemental information packet may be used for the indication. All further details described with respect to Fig. 6 may optionally also apply to this embodiment.

According to another embodiment, the decision whether or not to include a supplemental information message in the predetermined portion 13 is conditioned on a result of checking whether the supplemental information message is preceded by a prefix supplemental information message which indicates to include the following, e.g., the immediately following supplemental information message in the predetermined portion 13. In other words, according to this embodiment, inclusion or exclusion may be message-wise, e.g., instead of packet-wise. Details described with respect to Fig. 6 may optionally also apply to this embodiment.

According to a further embodiment, the decision whether or not to include a supplemental information packet in the predetermined portion 13 is conditioned on a result of checking whether the supplemental information packet comprises a nesting supplemental information message which indicates to include the supplemental information packet in the predetermined portion.

For example, the nesting supplemental information message may include a set of one or more supplemental information messages. From the fact that the set of supplemental information messages is signaled within the nesting supplemental information message, portion determinator 30 may conclude that the supplemental information packet, which includes the nesting supplemental information message, is to be considered as being included in the predetermined portion 13. In other words, according to this embodiment, inclusion or exclusion into the predetermined portion may be packet-wise, and the indication whether to include a packet may be signaled my means of a nesting supplemental information message.

According to another embodiment, a nesting supplemental information message is used for signaling message-wise inclusion or exclusion of supplemental information messages in the predetermined portion. According to this embodiment, the decision whether or not to include a supplemental information message is conditioned on a result of checking whether the supplemental information message is contained in a nesting supplemental information message which indicates to include the supplemental information message in the predetermined portion 13.

As already mentioned above, inclusion or exclusion of supplemental information packets may further be conditioned on whether or not they include a supplemental information message of a type which belongs to a set of types of supplemental information messages which are to be included in the predetermined portion. In other words, for example, this set of types of supplemental information messages comprises supplemental information message types which are to be included in the predetermined portion without explicitly being signaled in data stream 14. In other words, the set of types may be predefined. The predefined set of supplemental information messages may be in addition to adaptively signaled supplemental information message types to be included in the predetermined portion.

Inclusion of the supplemental information messages belonging to the predetermined set of supplemental information message types which are to be included in the predetermined portion may be independent of the indication 51 or, alternatively, may dependent on the indication 51. In other words, supplemental information messages belonging to the predetermined set of types may always be included in the predetermined portion. Independent of indication 51 or, alternatively, if indication 51 indicated that supplemental information messages are to be considered for verifying the data stream, supplemental information messages of the predetermined set of types are considered as being included in the predetermined portion 13 and, optionally, additional supplemental information messages, which are indicated in data stream 14, are considered for being included in the predetermined portion. If the indication 51 indicates that the one or more supplemental information messages are not to be considered to verifying the data stream, according to one embodiment, supplement information messages of the predetermined set of types are considered for being included in the predetermined portion 13 without considering further supplemental information messages for being included in the predetermined portion 13. According to another embodiment, if the indication 51 indicates that the one or more supplemental information messages are not to be considered for verifying the data stream, neither supplemental information messages of the predetermined set of types, nor any further supplemental information messages are considered for being included in the predetermined portion 13.

Inclusion and exclusion of the supplemental information messages by means of identification by the predetermined set of types may be performed packet-wise.

According to an embodiment, a supplemental information packet is considered to be included in the predetermined portion if it comprises any supplemental information message out of the predetermined set of types. According to another embodiment, a supplemental information packet is considered to be included in the predetermined portion if the first supplemental information message belongs to the predetermined set of types of supplemental information messages.

For example, according to an embodiment, portion determinator 30 conditions a decision whether or not to include a supplemental information packet of the supplemental information packets in the predetermine portion on a result of checking whether the supplemental information packet comprises any supplemental information message of a type out of a set types of supplemental information messages, which are to be included in the predetermined portion.

For example, if the indication 51 indicates that supplemental information messages are to be considered for verifying the data stream, portion determinator 30 may check, for a supplemental information packet of the supplemental information packets (e.g., for each of the supplemental information packets), whether the supplemental information packet comprises any supplemental information message of a type of supplemental information message types, which is to be included in the predetermined portion, and if the supplemental information packet comprises any supplemental information message of a type which is to be included in the predetermined portion, include the supplemental information packet into the predetermined portion.

According to an embodiment, portion determinator 30 conditions a decision whether or not to include a supplemental information packet of the supplemental information packets in the predetermine portion on a result of checking whether a first supplemental information message of one or more supplemental information messages carried in the supplemental information packet is one out of a set types of supplemental information messages, which are to be included in the predetermined portion.

For example, if the indication indicates that supplemental information are to be considered for authenticating the predetermined portion, checking for a supplemental information packet of the supplemental information packets (e.g., for each of the supplemental information packets) whether a first supplemental information message of one or more supplemental information messages carried in the supplemental information packet is one out of a set types of supplemental information messages, which are to be included in the predetermined portion, and if the first supplemental information message of one or more supplemental information messages carried in the supplemental information packet is one out of a set types of supplemental information messages, which are to be included in the predetermined portion, include the supplemental information packet into the predetermined portion.

In the following, an even further alternative of identifying the verification set is described which makes use of a portion-wise verification system implemented in the trustworthy check. In other words, the verification substreams described below with respect to Fig. 7 may be used for identifying supplemental information messages to be included in the trustworthy check.

Fig. 7 illustrates a further embodiment of decoder 20. In the features described with respect to Fig. 7, may optionally be combined with any of the previously described embodiments of decoder 20. According to the embodiment of Fig. 7, the trustworthiness check is performed in units of portions 13', 13". In other words, according to this embodiment, the data stream 14 comprises a number of portions, in units of which the data stream 14 is verifiable. For example, data stream 14 comprises a respective digital signature for each of the portions. Optionally, data stream 14 may comprises the above-mentioned verification parameter set for each of the portions. Alternatively, the verification parameters for all of the portions of one segment, or a subset of the portions, may be included in a common verification parameter set. The predetermined portion 13 described above may be one of the number of portions. Each of the portions may be defined by having one or more packets, or data included in the packets, assigned thereto.

For example, in Fig. 7, payload packets 16' are assigned to the portion 13', and payload packets 16" are assigned to portion 13". Performing the verification of data stream 14 in units in portion may comprise determining the respective portion, e.g., portion 13' and portion 13" in Fig. 7, and subject the respective portions to the trustworthiness check 41. To this end, data stream 14 may indicate respective digital signatures for the portions, e.g., digital signature 43' for portion 13' and a digital signature 43" for portion 13" in Fig. 7. For example, the portions as described with respect to Fig. 7 may be referred to as substreams or verification substreams of data stream 14.

For example, in case of video data streams, different layers of a layered video data stream may be assigned to different substreams. For example, different layers may carry different representations of a video encoded into video data stream 14, e.g., having different spatial resolutions, carrying different types of data such as texture and depth or may carry different views of a scene. As a further example, different substreams may be associated with different temporal layers of a media data stream, each of the temporal layers carrying samples for forming representations of the encoded media signal at different temporal resolutions, e.g., so that when combining different temporal layers a higher temporal resolution is obtained. However, it is noted that these are only examples of organizing data of a media data stream in different substreams, and the association between packets and substreams may be up to the encoder or the entity rendering the data stream 14 checkable on trustworthiness.

In other words, data stream 14 may comprise, for each of the number of portions, in units of which the data stream is verifiable, a respective digital signature, or alternatively, comprise an indication of a respective digital signature.

According to embodiments, in addition to the data stream being verifiable in units of the above-described portions in the sense of substreams, the trustworthiness check may be performed in units of segments 17 of a temporal sequence of segments of data stream 14. Segments may be referred to as verification periods. In other words, within one segment of data stream 14, multiple substreams, e.g., the above-described portions 13', 13", may be defined, in units of which the segment is verifiable, the packets or data belonging to each of the substreams not necessarily forming a contiguous part of data stream 14, but rather, within one segment, packets or pieces of data may be individually assigned to one of the substreams. In the following, only one segment 17 is considered, that is, for example, when referring to portions, it may be referred to the above-described substreams within one segment 17.

According to an embodiment, data stream 14 comprises an indication of the count of substreams of the data stream, e.g., within one segment, e.g., only one segment of data streams is considered as the data stream.

According to an embodiment, extractor 21 derives the number of portions, e.g., the count of substreams of the data stream, from data stream 14, e.g., by deriving the indication of the number of portions from the data stream 14. According to this embodiment, portion determinator 30 may assign each of the payload packets 16 to one of the portions, e.g., to one out of one or more of the portions, i.e., not necessarily to each of the portions.

In the following, embodiments according to the invention will be described, which make use of the substream concept for verifying supplemental information messages.

According to an embodiment, the portions of the number of portions in order define among them, e.g., a hierarchical order, each of the portions having a rank within the order.

According to an embodiment, the verification of the portions is performed from lowest to highest rank among the portions.

According to an embodiment, the verification of a portion depends on the lower rank neighbor of the portion in the order of the portions. For example, a hash value derived from the lower ranked portion may be included in a verification string for verifying the portion.

According to an embodiment, the trustworthiness check of a portion may optionally depend on one or more lower ranked portions. For example, on or more hash values derived from one or more of the lower ranked portions, on which the trustworthiness check for the portion depends, may be included in a verification string for verifying the portion.

In other words, the portions may provide for a portion-wise verification, in which hash values are already derived for a portion may be reused for verifying higher ranked portions.

According to an embodiment, the verification set of supplemental information messages, which are to be considered for the trustworthiness check, are verified as part of a predetermined one of the substreams. For example, supplemental information messages to be verified may be gathered within one substream of a predetermined rank within the order defined among the portions.

According to an embodiment, in which the verification subset is identified in terms of supplemental information message types, portion determinator 30 may include a supplemental information message of the supplemental information message types having any type out of the set of types of supplemental information messages to be included in the trustworthiness check in the predetermined portion 13, which, according to this embodiment, has a predetermined rank within an order defined among the number of portions.

For example, the predetermined rank is the highest rank within the order defined among the number of portions.

Alternatively, supplemental information messages to be included in the trustworthiness check may be included in the portions, to which payload packets to which the respective supplemental information messages are associated, are assigned. As mentioned above, each of the supplemental information messages may be associated with one of the payload packets. A supplemental information message to be included in the trustworthiness check may be assigned to the portion, to which the payload packet, to which the supplemental information message is associated, as assigned.

According to an embodiment, the data stream 14 comprises an indication, which indicates, e.g., which differentiates between, including all supplemental information messages of a type to be included in the trustworthiness check into a substream of a predetermined rank, or including all supplemental information messages of a type to be included in the trustworthiness check into the portion associated with their respectively assigned payload packets.

According to another embodiment, the number of portions includes first portions, each of which has payload packets associated therewith, and each of which has associated therewith a respective second portion of the number of portions, into which supplemental information messages, which are to be considered for the trustworthiness check, and which are assigned to payload packets associated with the respective first portion, are to be included. In other words, the number of portions include first portions and second portions, each of the first portions being associated with one of the second portions, the first portions being for verifying payload packets, and a second portion being for verifying the supplemental information messages assigned to the payload packets of the respectively associated first portion.

In more general terms, according to an embodiment, each of the supplemental information messages is associated with one of the payload packets, and wherein the apparatus is configured for assigning each of the supplemental information messages of the data stream having any type out of a set of types of supplemental information messages to one of the portions, which one portion is associated with a further one of the portions, the further one of the portions being associated with the payload packets associated with the respective supplemental information message.

According to an embodiment, each of the supplemental information packets is associated with one of the payload packets, and wherein the apparatus is configured for assigning each of the supplemental information packets of the data stream carrying any type out of a set of types of supplemental information messages to one of the portions, which one portion is associated with a further one of the portions, the further one of the portions being associated with the payload packets associated with the respective supplemental information packet.

According to an embodiment, apparatus 20 is configured for deriving, from the data stream, a syntax element, which indicates a count of the number of portions, the syntax element having a value, wherein the apparatus is configured for inferring that the count of the number of portions corresponds to the value plus one, multiplied by two.

According to an embodiment, apparatus 20 is configured for deriving, from the data stream, a syntax element, which indicates a count of the number of portions, the syntax element having a value, wherein the apparatus is configured for inferring that the count of the number of portions corresponds to the value plus one.

According to an embodiment, the one portion and the further one of the portions are succeeding each other within a hierarchical order defined among the number of portions, e.g., the one of the portions succeeds the further one portion in the hierarchical order.

According to an embodiment, apparatus a position index of the one portion within a hierarchical order defined among the portions corresponds to a position index of the further one portion within the hierarchical order plus the half of the count of the number of portions.

Although the description of Figs. 1 to 7 relates to apparatuses, the block diagrams of these figures may alternatively be considered as flow diagrams of respective methods, in which each of the blocks represents a step of the respective method. Thus, Figs. 1 to 7 further provide illustrations of the respective methods.

In the following, aspects of the invention are described again, in other words, in specific implementations and further embodiments of the invention will be described. The embodiments described with respect to Figs. 1 to 7 may be considered generalizations of the embodiments described in the following, however, the following description may further contain additional embodiments of the invention, which may be implemented independent of the previously described embodiments. Any of the features and details described with respect to the following embodiments, may optionally be integrated into the previous embodiments.

Although the following description refers to video data streams, it is clear that the same concepts may equivalently be applied to any types of media data streams, or any types of data streams comprising sampled data. Further examples of sampled data may be waveform signals. Besides audio signals, further example of waveform signals are biomedical waveform signals.

Authenticating video requires providing information to a client about how the hashing has been carried out (which includes the hashing method used and how the data is organized and what is actually hashed and how) the certificate that carries the public key which can be used to verify the and providing the one or more signature for the video.

In the following, an existing solution for content verification is described. The subsequent embodiments of the invention may be described in terms of amendments to this existing solution, so that details of this existing solution may form features of embodiments of the invention.

For this purpose, an existing solution is to include 3 SEI messages within each Coding Video Sequence (CVS) of the video bitstream:

> 1. Digitally signed content initialization SEI message: It carries information about which is the hashed method that is used, an URL to get a certificate or a C2PA manifest that contains among other information the public key and UUID for the content that is used when computing the signature so that different bitstreams (e.g., different audio and video streams) that belong to the same content and are separately signed can be identified as belonging to the same content (thus the audio of a different content cannot be used for a particular video - avoiding that what a person said at a different time is used for a new video) and how many substreams are used to produce signatures. The later refers to splitting the content into different substreams, each of which has a signature and thus if less important parts of the video are dropped (e.g., for layered coding a high resolutions enhancement layer when there is network congestion) the received parts can still be authenticated.

2. Digitally signed content selection SEI message: It identifies the substream ID to which the slices (i.e. VCL NAL units) of a picture belong to.

3. Digitally signed content verification SEI message: It provides for each substream the corresponding signature.

An existing solution of these three SEI messages and of the verification process is reproduced in the following. Details of this solution may optionally be implemented in embodiments of the present invention, unless stated otherwise, e.g. in terms of amendments of this solution.

Digitally signed content initialization SEI message:

| trustworthy_content_initialization( payloadSize ) { | Descriptor |
|---|---|
| dsci_hash_method_type | u(8) |
| dsci_key_source_uri | st(v) |
| dsci_num_verification_substreams_minus1 | ue(v) |
| dsci_key_retrieval_mode_idc | ue(v) |
| if( dsci_key_retrieval_mode_idc = = 1){ | |
| dsci_use_key_register_idx_flag | u(1) |
| if( dsci_use_key_register_idx_flag ) | |
| dsci_key_register_idx | ue(v) |
| } | |
| dsci_content_uuid_present_flag | u(1) |
| if( dsci_content_uuid_present_flag) | |
| dsci_content_uuid | u(128) |
| } | |

**dsci_hash_method_type** indicates the secure hash algorithm that is used to calculate message digests for subsets of SPS, PPS, APS, PH and VCL NAL units of the coded video sequence. Based on these message digests and the digital signatures present in digitally signed content verification SEI messages, a decoder can verify that the coded video was produced by the content originator indicated by the syntax elements dsci_key_source_uri, dsci_use_key_register_idx_flag and, if dsci_use_key_register_idx_flag flag is equal to 1, dsci_key_register_idx. The supported values for the syntax element dsci_hash_method_type, the block size used for calculating the message digest, and the size of the calculated message digests are specified in. Values of dsci_hash_method_type that are not listed in the Table 1 are reserved for future use by ITU-T | ISO/IEC and shall not be present in payload data conforming to this version of this Specification. Decoders shall ignore trustworthy initialization SEI messages that contain reserved values for dsci_hash_method_type. The secure hash algorithms listed in Table 1 are specified in the "Secure Hash Standard" FIPS PUB 180-4.

**Table 1- Supported values of dsci_hash_method_type**

| dsci_hash_method_t ype | Hash method | Block size (bits) | Message digest size (bits) |
|---|---|---|---|
| 0 | SHA-1 | 512 | 160 |
| 1 | SHA-224 | 512 | 224 |
| 2 | SHA-256 | 512 | 256 |
| 3 | SHA-384 | 1024 | 384 |

(continued)

| dsci_hash_method_t ype | Hash method | Block size (bits) | Message digest size (bits) |
|---|---|---|---|
| 4 | SHA-512 | 1024 | 512 |
| 5 | SHA-512/224 | 1024 | 224 |
| 6 | SHA-512/256 | 1024 | 256 |

**dsci_key_source_uri** contains a URI with syntax and semantics as specified in IETF Internet Standard 66. If dsci_key_retrieval_mode_idc is equal to 0, dsci_key_source_uri specifies a C2PA Manifest Store as specified in C2PA Technical Specification. If dsci_key_retrieval_mode_idc is equal to 1, the following applies:

- If dsci_use_key_register_idx_flag is equal to 0, the URI identifies the certificate of the content provider that can be used for verifying the signatures present in following digitally signed content verification SEI messages;
- Otherwise (if dsci_use_key_register_idx_flag is equal to 1), the URI identifies a register of certificates and the certificate of the content provider that can be used for verifying the signatures present in following digitally signed content verification SEI messages as indicated by dsci_key_register_idx.

**dsci_num_verification_substreams_minus1** plus 1 indicates the number of substreams for which message digests are calculated and signatures may be present in following digitally signed content verification SEI messages.

The variable NumVerificationSubstream is derived as:

$$NumVerificationSubstream = dsci\_num\_verification\_substreams\_minus1 + 1.$$

**dsci_key_retrieval_mode_idc** equal to 0 indicates that the URI contained in dsci_key_source_uri specifies a C2PA Manifest Store as specified in C2PA Technical Specification. dsci_key_retrieval_mode_idc equal to 1 indicates that the URI contained in dsci_key_source_uri and, when present, dsci_key_register_idx specify a certificate. In this version of this Specification dsci_key_retrieval_mode_idc shall be in the range of 0 to 1. Decoders shall also allow other values of dsci_key_retrieval_mode_idc, but shall ignore the content of the digitally signed content initialization SEI message, associated digitally signed content selection SEI messages and associated digitally signed content verification SEI messages.

**dsci_use_key_register_idx_flag** equal to 1 indicates that the URI contained in dsci_key_source_uri specifies a register of certificates and the syntax element dsci_key_register_idx is present in the SEI message. dsci_use_key_register_idx_flag equal to 0 indicates that the URI contained in dsci_key_source_uri specifies a certificate and the syntax element dsci_key_register_idx is not present in the SEI message.

When dsci_key_retrieval_mode_idc is equal to 0, the media asset for which Active Manifest, as specified in C2PA Technical Specification, provides content binding is the digitally signed content initialization SEI message. The following constraints apply to the C2PA Manifest Store identified by the dsci_key_source_uri:

- The Active Manifest shall contain exactly one c2pa.hash.data, as specified in C2PA Technical Specification, hard binding to content assertion.
- The exclusion range indicated in the c2pa.hash.data shall match the dsci_key_source_uri bytes in the digitally signed content initialization SEI message.

**dsci_key_register_idx,** when present, contains an index that specifies the certificate of the content provider, in the certificate register indicated by dsci_key_source_uri, which can be used for verifying the signatures present in following digitally signed content verification SEI messages.

The certificate indicated by the syntax elements dsci_key_retrieval_mode_idc, dsci_use_key_register_idx_flag, dsci_key_source_uri, and, if dsci_use_key_register_idx_flag is equal to 1, dsci_key_register_idx shall specify a digital signature method, with associated parameters (if applicable), and the public key of the content provider. When dsci_key_retrieval_mode_idc is equal to 1, the format in which this information is provided is outside the scope of this specification. It is suggested that a digital signature algorithm conforming to the "Digital Signature Standard" FIPS 186-5 is used.

**dsci_content_uuid_present_flag** equal to 1 specifies that the syntax element dsci_content_uuid is present. dsci_content_uuid_present_flag equal to 0 specifies that the syntax element dsci_content_uuid is not present. When dsci_key_retrieval_mode_idc is equal to 0, dsci_content_uuid_present_flag shall be equal to 1.

**dsci_content_uuid,** when present, indicates an identifier for the video content and shall have a value specified as a UUID according to the procedures of ISO/IEC 11578:1996, Annex A.

When a digitally signed content initialization SEI message is present in an AU, the calculation of NumVerificationSubstream message digests is initialized according to the specification in FIPS PUB 180-4 for the specified dsci_hash_method_type. Each SPS, PPS, APS, PH and VCL NAL unit following the digitally signed content initialization SEI message is associated to one of the NumVerificationSubstream message digests; the verification substream id is either indicated by the digitally signed content selection SEI message or, if no digitally signed content selection SEI message is present for a PU, inferred to be equal to 0. The message used for calculating the k-th message digest, with k being in the range from 0 to dsci_num_verification_substreams_minus1, inclusive, is obtained by concatenating all SPS, PPS, APS and VCL NAL units associated with the k-th verification substream. The calculation of the message digests is conducted based on blocks, where the block size is specified in Table 1 depending on the value of dsci_hash_method_type. For each SPS, PPS, APS, PH and VCL NAL unit, the associated message digest is updated according to the algorithm specified in FIPS PUB 180-4 for the specified dsci_hash_method_type. Note that, since the message digests are calculated for the concatenation of all SPS, PPS, APS, PH and VCL NAL units for a verification substream, some of the processing blocks typically span over two or more successive NAL units.

Digitally signed content selection SEI message:

| trustworthy_content_selection( payloadSize ) { | **Descript or** |
|---|---|
| **dscs_verification_substream_id** | u(8) |
| } | |

**dscs_verification_substream_id** indicates the verification substream to which the SPS, PPS, APS, PH and VCL NAL units of the current coded picture are assigned to. When a digitally signed content initialization SEI message was present in the current coded video sequence, but no digitally signed content selection SEI message is present for a coded picture, the value of dscs_verification_substream_id is inferred to be equal to 0. The value of dscs_verification_substream_id shall be in the range from 0 to dsci_num_verification_substreams_minus1, inclusive.

As specified below, the message digest for the verification substream with id equal to dscs_verification_substream_id is updated with the SPS, PPS, APS, PH and VCL NAL units of the current coded picture according to the dsci_hash_method_type specified in the preceding digitally signed content initialization SEI message.

Digitally signed content verification SEI message:

| trustworthy_content_verification( payloadSize ) { | **Descript or** |
|---|---|
| **dscv_verification_substream_id** | u(8) |
| **dscv_signature_length_in_octets_minus1** | u(16) |
| **dscv_signature** | u(v) |
| } | |

**dscv_verification_substream_id** indicates the verification substream to which the SEI message applies.

**dscv_signature_length_in_octets_minus1** plus **1** specifies the length of the syntax element dscv_signature in octets (one octet consists of 8 bits).

**dscv_signature** contains the digital signature for the verification substream indicated by dscv_verification_substream_id.

The verification of the bitstream signature consists of the following ordered steps:

 1. The calculation of the message digest referred to as CurrDigest is finalized as follows:

  - The concatenation of the SPS, PPS, APS, PH and VCL NAL units for the verification substream with id equal to dscv_verification_substream_id is padded according to the specification in FIPS PUB 180-4. Note that it is sufficient to pad the last NAL unit of the verification substream.
  - The calculation of the message digest CurrDigest is finalized according to the specification in FIPS PUB 180-4. The length (in bits) of the message digest is given in Table 1.

 2. The reference message digest RefDigest is determined as follows:

- If dscv_verification_substream_id is greater than 0, the reference message digest RefDigest is the last calculated message digest for the verification substream with id equal to dscv_verification_substream_id - 1. It is a requirement of bitstream conformance that any digitally signed content verification SEI associated with verification substream id equal to dscv_verification_substream_id - 1 is present before the digitally signed content verification SEI message with verification substream id equal to dscv_verification_substream_id.
- Otherwise, if the current digitally signed content verification SEI message is the first digitally signed content verification SEI with verification id equal to 0 in the coded video sequence and the preceding coded video sequence did not contain any digitally signed content initialization SEI message (this includes the case that the current coded video sequence is the first coded video sequence in the bitstream), the RefDigest is set equal to a bitstring that consists of DigestSize bits equal to 1, where DigestSize is the size of the message digest as specified in Table 1.
- Otherwise, the reference message digest RefDigest is the last calculated message digest for the verification substream with id equal to 0.

3. The identification string IdString is constructed by concatenating the binary representations of the reference message digest RefDigest, the current message digest, and the dsci_hash_method_type and, when present, the dsci_content_uuid2.

The number of bits for RefDigest is determined by the value of dsci_hash_method_type which was valid when calculating the value of RefDigest, the number of bits for CurrDigest is determined by the current value of dsci_hash_method_type, and the value of dsci_hash_method_type is represented with 8 bits and, when present, the value of dsci_content_uuid is represented with 128 bits.

4. The identification string IdString represents the message used for verifying the signature. The signature verification algorithm and the public key used for verifying the signature are indicated by the syntax elements dsci_use_key_register_idx_flag, dsci_key_source_uri, and, if dsci_use_key_register_idx_flag is equal to 1, dsci_key_register_idx.

NOTE 1 - Since the bitstring used for signature verification includes the RefDigest, it cannot only be verified that the SPS, PPS, APS, PH and VCL NAL units used for calculated the current message digest are correct, but it can additionally be verified that neither additional SPS, PPS, APS, PH and VCL NAL units were added to the bitstream nor SPS, PPS, APS, PH and VCL NAL units were removed from the bitstream.

NOTE 2 - When a decoder tunes into a bitstream, the IdString constructed for the first digitally signed content verification SEI message cannot be verified, because the value of RefDigest cannot be calculated correctly. But starting from the second digitally signed content verification SEI message, the signatures can be verified.

After verification, the message digest for the verification substream with id equal to dscv_verification_substream_id is reinitialized according to the specification in FIPS PUB 180-4 for the specified dsci_hash_method_type.

In the following, embodiments of the invention are described.

It is not enough with authenticating the data, which directly has an impact on the decoded picture by a decoder, i.e. the VCL NAL units. Some processes might be linked to the video data by using metadata that describes a post-processing step that could potentially change the content drastically. An example thereof is the Neural Network post filter SEI message, that could output a very different picture than the one that is output by the decoder using only the VCL NAL units.

Furthermore, some descriptive metadata such as copyright or content labelling could be modified that does not affect the output samples itself but critical information that could have other implications.

Another attack angle could be generative face technology that can be manipulated and misused to alter the decoded picture fraudulently.

Further, masking/hiding attacks, i.e. hiding decoded samples in the output, could potentially be carried out through introduction of fraudulent film grain or manipulated display overlays. Also, all frame packing related SEI messages have the potential to be manipulated for fraudulent means in their respective application to mask or hide decoded samples.

Even further, user data registered and unregistered SEI messages should be able to be signed for realizing authenticity for application specific solutions.

Still always signing such a metadata with the VCL NAL units might not be important, since some for the metadata might be irrelevant and it would prevent some systems that do not need such metadata from dropping it which goes against the design in video coding standards that put such data into bitstreams with a lesser importance and allow dropping it without affecting the decoding process.

Same goes for repetition of SEI messages, a robustness measure in video coding standards in which some SEI messages with same content are allowed to be placed repeatedly within certain portions of the bitstream. Any such repetition allows to be robust against packet losses affecting the redundant data and any solution for media authenticity must be robust to the same extend, i.e. losing redundant data should not impede the capability to test authenticity of the received data.

As a first embodiment, information is added into the bitstream that allows identifying whether such a metadata (i.e., SEI messages) are taken into account for computing the hash/signature or not. An instantiation thereof is shown in the following.

**Digitally signed content initialization SEI message**

| digitally_signed_content_initialization( payloadSize ) { | Descriptor |
|---|---|
| **dsci_hash_method_type** | u(8) |
| **dsci_key_source_uri** | st(v) |
| **dsci_num_verification_substreams_minus1** | ue(v) |
| **dsci_key_retrieval_mode_idc** | ue(v) |
| if( dsci_key_retrieval_mode_idc = = 1){ | |
| **dsci_use_key_register_idx_flag** | u(1) |
| if( dsci_use_key_register_idx_flag ) | |
| **dsci_key_register_idx** | ue(v) |
| } | |
| **dsci_content_uuid_present_flag** | u(1) |
| if( dsci_content_uuid_present_flag) | |
| **dsci_content_uuid** | u(128) |
| **dsci_sei_messages_digitally_signed_flag** | u(1) |
| } | |

**dsci_sei_messages_digitally_signed_flag** equal to **1** specifies that the non-VCL NAL units corresponding to SEI messages of the CVS are used to calculate message digests. **dsci_sei_messages_digitally_signed_flag** equal to 0 specifies that the non-VCL NAL units corresponding to the SEI messages of the CVS are not used to calculate message digests.

Different options exist on how to treat the multitude of SEI message types with this respect. On one embodiment all SEI messages are included into the message digests when the signalling indicates that SEI messages shall be taken into account for signing the video bitstream by dsci_sei_messages_digitally_signed_flag.

As an alternative, this treatment only applies to a predefined set of SEI messages that are identified as relevant for signing. For instance, in one embodiment, a video coding standard could define the list RelevantForSigningSEIMessages that contains one or more SEI message types as listed below:

- NN post filter related: NNPFC, NNPFA SEI messages,
- Film Grain Synthesis: FGS
- SEI processing order SEI message to indicate the order of post processes of SEI messages: SPO
- Masking related: FGS SEI message, display overlay SEI message,
- Face-Generative related: GFV SEI message, GFVE SEI message
- Packing related: Frame packing arrangement SEI message, Packed regions information SEI message, region-wise-packing SEI message, Constituent rectangles SEI message
- Registered and unregistered user-data SEI messages
- Legal, regulation and annotation related SEI messages: copyright, content labelling or text description SEI messages, AI usage restriction SEI message

In an alternative embodiment, the SEI messages to be included in the authenticity treatment could also be identified through a value range of SEI message types, that could also host reserved spaces for future SEI messages.

As a further alternative embodiment, the signalling could indicate different possible combinations of SEI messages that are to be signed. For instance, this could be done by adding a syntax element that points to the different combinations, as follows:

| digitally_signed_content_initialization( payloadSize ) { | Descriptor |
|---|---|
| **dsci_hash_method_type** | u(8) |
| **dsci_key_source_uri** | st(v) |
| **dsci_num_verification_substreams_minus1** | ue(v) |
| **dsci_key_retrieval_mode_idc** | ue(v) |
| if( dsci_key_retrieval_mode_idc = = 1){ | |
| **dsci_use_key_register_idx_flag** | u(1) |
| if( dsci_use_key_register_idx_flag ) | |
| **dsci_key_register_idx** | ue(v) |
| } | |
| **dsci_content_uuid_present_flag** | u(1) |
| if( dsci_content_uuid_present_flag) | |
| **dsci_content_uuid** | u(128) |
| **dsci_sei_messages_digitally_signed_flag** | u(1) |
| if(dsci_sei_messages_digitally_signed_flag) | |
| **dsci_sei_messages_digitally_signed_idc** | ue(v) |
| } | |

**dsci_sei_messages_digitally_signed_flag** equal to 1 specifies that the non-VCL NAL units corresponding to SEI messages of the CVS are used to calculate message digests. **dsci_sei_messages_digitally_signed_flag** equal to 0 specifies that the non-VCL NAL units corresponding to the SEI messages of the CVS are not used to calculate message digests.

**dsci_sei_messages_digitally_signed_idc** identifies the SEI messages that are used to calculate message digests as specified in Table X. The value of dsci_sei_messages_digitally_signed_idc shall be in the range of 0 to Y, inclusive.

| Value | SEI messages used for the message digest |
|---|---|
| 0 | NNPFC and NNPFA SEI messages |
| 1 | GFV and GFVE SEI message |
| 2 | FGS SEI message |
| 3 | [Further individual or related SEI messages] |
| 4 | [Combinations of SEI messages, e.g. corresponding to Value 0 & 1, or 0 & 2, and so on] |
| 5 | SEI Processing Order SEI message -SPTO |
| 6 | SPO and NNPFC and NNPFA and FGS |
| 7-Y | reserved |

As an alternative to use two syntax elements only the idc could be used where the value 0 means no SEI message is used for the message digest.

As a further alternative the SEI types that are used to calculate message digest could be signalled in the bitstream. An example is shown in the following:

| digitally_signed_content_initialization( payloadSize ) { | Descriptor |
|---|---|
| **dsci_hash_method_type** | u(8) |
| **dsci_key_source_uri** | st(v) |

(continued)

| | |
|---|---|
| **dsci_num_verification_substreams_minus1** | ue(v) |
| **dsci_key_retrieval_mode_idc** | ue(v) |
| if( dsci_key_retrieval_mode_idc = = 1){ | |
| **dsci_use_key_register_idx_flag** | u(1) |
| if( dsci_use_key_register_idx_flag ) | |
| **dsci_key_register_idx** | ue(v) |
| } | |
| **dsci_content_uuid_present_flag** | u(1) |
| if( dsci_content_uuid_present_flag) | |
| **dsci_content_uuid** | u(128) |
| **dsci_sei_messages_digitally_signed_flag** | u(1) |
| if(dsci_sei_messages_digitally_signed_flag){ | |
| **dsci_num_sei_message_types_digitally_signed_minus1** | ue(v) |
| for( i = 0; i < dsci_ num_sei_messages_digitally_signed_minus1 +1, i++ ) | |
| **dsci_digitally_signed_sei_type[ i ]** | u(8) |
| } | |
| } | |

**dsci_num_sei_message_types_digitally_signed_minus1** plus 1 specifies the number of SEI message types that are used to calculate message digests.

**dsci_digitally_signed_sei_type[ i ]** identifies the i-th SEI type that is used to calculate message digests.

Note that the SEI message types can use more than 8 bits if the type value is larger than 255. Therefore, the syntax above could be extended to have instead of 8 bits 16 bits. Alternatively, a further syntax element could be added (e.g., dsci_digitally_signed_sei_type_length_inbytes_minus1) that indicates the length of the syntax element dsci_digitally_signed_sei_type[ i ] (e.g., to 8*(dsci_digitally_signed_sei_type_length_inbytes_minus1 +1) bits).

Alternatively, instead of identifying beforehand which SEI messages are used for message digests, a prefix SEI message could precede each SEI message that is used for a message digest or a nesting SEI message that includes any SEI message could be used to indicate that such an SEI message is used for message digest.

Note that SEI messages are encapsulated within a single SEI NAL unit, which might contain more than one SEI message. Authentication is currently performed based on NAL units (whole NAL units). For SEI messages only SEI messages could be taken into account in one embodiment but as an alternative, the whole SEI NAL unit could be taken into account. For this purpose, identifying whether an SEI NAL uit is used or not based on the first SEI message would be beneficial. For this, a constraint is applied that no SEI message with an SEI message type that is not to be verified is included into a same NAL unit in which an SEI message is included with an SEI message type that is to be verified.

A further aspect to take into account is the assignment of SEI messages to a particular substream. Different options exist:

1. The SEI messages belong to the highest substream ID indicated
2. The SEI message belongs to the same substream ID as the PUs that include such an SEI message
3. When it is indicated that SEI messages are used for message digest/ are used to generate the signature, the number of substreams is double the one that is signalled and the substream of SEI messages is indicated by the digitally signed content selection SEI message.

As for option 1 the following changes would be required.

**1.2 Digitally signed content selection SEI message**

**1.2.1 Digitally signed content selection SEI message syntax**

| digitally_signed_content_selection( payloadSize ) { | Descriptor |
|---|---|
| **dscs_verification_substream_id** | u(8) |
| } | |

**1.2.2 Digitally signed content selection SEI message semantics**

The digitally signed content selection SEI message provides a mechanism for associating coded pictures with one of the verification substreams indicated in a digitally signed content initialization SEI message.

[...]

**dscs_verification_substream_id** indicates the verification substream to which the SPS, PPS, APS, PH and VCL NAL units of the current coded picture are assigned to. When a digitally signed content initialization SEI message was present in the current coded video sequence, but no digitally signed content selection SEI message is present for a coded picture, the value of dscs_verification_substream_id is inferred to be equal to 0 for SPS, PPS, APS, PH and VCL NAL units. When dsci_sei_messages_digitally_signed_flag is equal to 1 the value of dscs_verification_substream_id is inferred to be equal to dsci_num_verification_substream_minus1 for SEI messages as specified by the DSCI SEI message (here a subset of SEI messages that are used for message digest might be specified in the DSCI SEI message). The value of dscs_verification_substream_id shall be in the range from 0 to dsci_num_verification_substreams_minus1, inclusive.

As an alternative in order to allow for signalling whether option 1 (highest substream for SEI messages) or option 2 (same substream for SEI messages as the VCL NAL units of the coded picture) is used, the syntax of the DSCI SEI message could be extended as follows:

| digitally_signed_content_initialization( payloadSize ) { | Descriptor |
|---|---|
| **dsci_hash_method_type** | u(8) |
| **dsci_key_source_uri** | st(v) |
| **dsci_num_verification_substreams_minus1** | ue(v) |
| **dsci_key_retrieval_mode_idc** | ue(v) |
| if( dsci_key_retrieval_mode_idc = = 1){ | |
| **dsci_use_key_register_idx_flag** | u(1) |
| if( dsci_use_key_register_idx_flag ) | |
| **dsci_key_register_idx** | ue(v) |
| } | |
| **dsci_content_uuid_present_flag** | u(1) |
| if( dsci_content_uuid_present_flag) | |
| **dsci_content_uuid** | u(128) |
| **dsci_sei_messages_digitally_signed_flag** | u(1) |
| if(dsci_sei_messages_digitally_signed_flag){ | |
| **dsci_sei_messages_digitally_signed_highest_substream_flag** | u(1) |
| } | |
| } | |

**dsci_sei_messages_digitally_signed_highest_substream_flag** equal to 1 specifies the SEI messages that are used to calculate message digests are assigned to the highest verification substream. dsci_sei_ messages_digitally_signed_highest_substream_flag equal to 0 specifies the SEI messages that are used to calculate message digests are assigned to the same verification substream as the VCL NAL units of the associated coded picture.

### 1.2.2 Digitally signed content selection SEI message semantics

The digitally signed content selection SEI message provides a mechanism for associating coded pictures with one of the verification substreams indicated in a digitally signed content initialization SEI message.

[...]

**dscs_verification_substream_id** indicates the verification substream to which the SPS, PPS, APS, PH and VCL NAL units of the current coded picture are assigned to. When a digitally signed content initialization SEI message was present in the current coded video sequence, but no digitally signed content selection SEI message is present for a coded picture, the value of dscs_verification_substream_id is inferred to be equal to 0 for SPS, PPS, APS, PH and VCL NAL units. The value of dscs_verification_substream_id shall be in the range from 0 to dsci_num_verification_substreams_minus1, inclusive.

A further alternative would be to do as indicated above in option 3. This could be instantiated in the standard as follows:

| digitally_signed_content_initialization( payloadSize ) { | Descriptor |
|---|---|
| **dsci_hash_method_type** | u(8) |
| **dsci_key_source_uri** | st(v) |
| **dsci_num_verification_substreams_minus1** | ue(v) |
| **dsci_key_retrieval_mode_idc** | ue(v) |
| if( dsci_key_retrieval_mode_idc = = 1){ | |
| **dsci_use_key_register_idx_flag** | u(1) |
| if( dsci_use_key_register_idx_flag ) | |
| **dsci_key_register_idx** | ue(v) |
| } | |
| **dsci_content_uuid_present_flag** | u(1) |
| if( dsci_content_uuid_present_flag) | |
| **dsci_content_uuid** | u(128) |
| **dsci_sei_messages_digitally_signed_flag** | u(1) |
| if(dsci_sei_messages_digitally_signed_flag){ | |
| **dsci_sei_messages_digitally_signed_separate_substream_flag** | u(1) |
| } | |
| } | |

**dsci_sei_ messages_digitally_signed_ separate _substream_flag** equal to 1 specifies the SEI messages that are used to calculate message digests are assigned to a separate verification substream as specified in the semantics of DSCS SEI message. dsci_sei_ messages_digitally_signed_separate_substream_flag equal to 0 specifies the SEI messages that are used to calculate message digests are assigned to the same verification substream as the VCL NAL units of the associated coded picture.

### 1.2.2 Digitally signed content selection SEI message semantics

The digitally signed content selection SEI message provides a mechanism for associating coded pictures with one of the verification substreams indicated in a digitally signed content initialization SEI message.

[...]

**dscs_verification_substream_id** indicates the verification substream to which the SPS, PPS, APS, PH and VCL NAL units of the current coded picture are assigned to. When dsci_sei_messages_digitally_signed_flag is equal to 1 and dsci_sei_ messages_digitally_signed_highest_substream_flag equal to 0 the SEI messages used for message digest belong to the same verification substream. When dsci_sei_messages_digitally_signed_flag is equal to 1 and dsci_sei_ messages_digitally_signed_highest_substream_flag equal to 1 the SEI messages used for message digest belong to the verification substream with id equal to dscs_verification_substream_id plus dsci_num_verification_substreams_minus1 plus 1. When a digitally signed content initialization SEI message was present in the current coded video sequence, but no digitally signed content selection SEI message is present for a coded picture, the value of dscs_verification_substream_id is inferred to be equal to 0 for SPS, PPS, APS, PH and VCL NAL units. When dsci_sei_messages_digitally_signed_flag is equal to 1, dsci_sei_messages_digitally_signed_highest_substream_flag equal to 1 and no digitally signed content selection SEI message is present for a coded picture, the SEI messages used for message digest belong to the verification substream with id equal to dsci_num_verification_substreams_minus1 plus 1. The value of dscs_verification_substream_id shall be in the range from 0 to dsci_num_verification_substreams_minus1, inclusive.

Alternatively, a syntax element could be introduced that differentiates among option 1, 2 and 3 as described above.

Video coding schemes

In the following, a video coding scheme will be described, into which embodiments of the invention may optionally be implemented. In other words, apparatus 20 according to any of the previously described embodiments may be a video decoder, which is implemented according to any of the embodiments of decoder 20 described in the following. Similarly, apparatus 10 may optionally be a video encoder according to any of the embodiments of encoder 10 that will be described in the following.

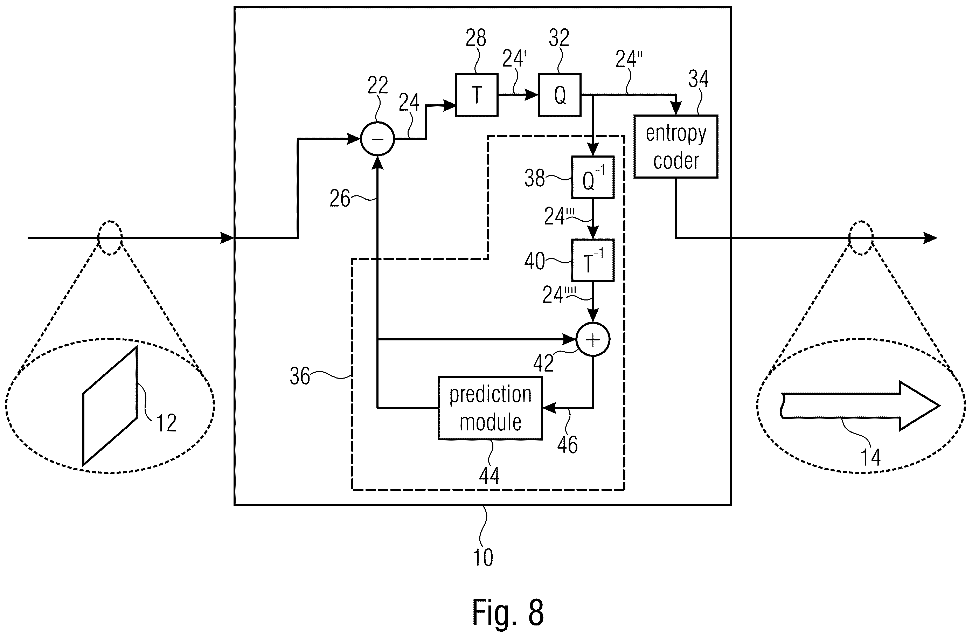

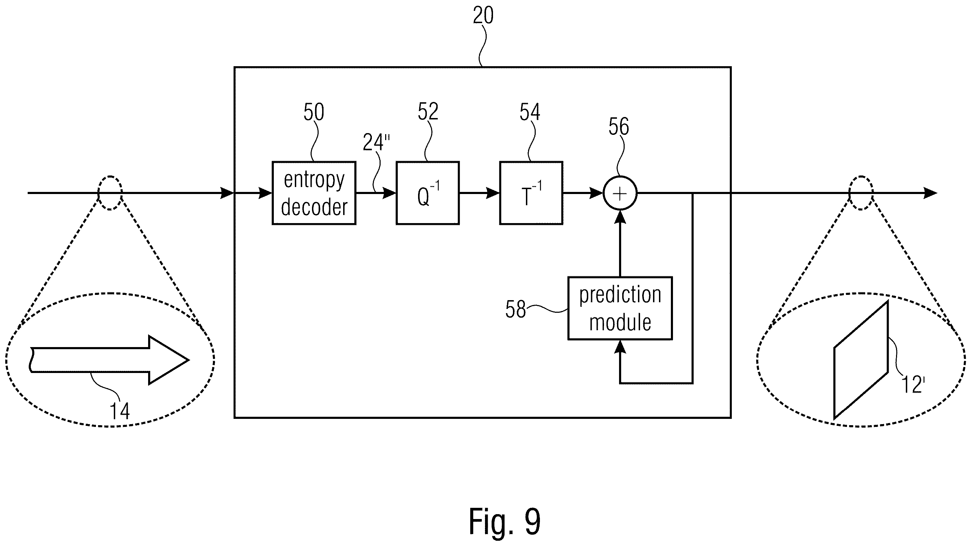

The following description of the figures starts with a presentation of a description of an encoder and a decoder of a block-based predictive codec for coding pictures of a video in order to form an example for a coding framework into which embodiments of the present invention may be built in. The respective encoder and decoder are described with respect to Fig. 8, Fig. 9, and Fig. 10. Thereinafter the description of embodiments of the concept of the present invention is presented along with a description as to how such concepts could be built into the encoder and decoder of Fig. 8, and Fig. 9, respectively, although the embodiments described with the subsequent Figures and following, may also be used to form encoders and decoders not operating according to the coding framework underlying the encoder and decoder of Fig. 8, and Fig. 9, and Fig. 10.

Fig. 8 shows an apparatus for predictively coding a picture 12 into a data stream 14 exemplarily using transform-based residual coding. The apparatus, or encoder, is indicated using reference sign 10. Fig. 9 shows a corresponding decoder 20, i.e. an apparatus 20 configured to predictively decode the picture 12' from the data stream 14 also using transform-based residual decoding, wherein the apostrophe has been used to indicate that the picture 12' as reconstructed by the decoder 20 deviates from picture 12 originally encoded by apparatus 10 in terms of coding loss introduced by a quantization of the prediction residual signal. Fig. 8 and Fig. 9 exemplarily use transform based prediction residual coding, although embodiments of the present application are not restricted to this kind of prediction residual coding. This is true for other details described with respect to Fig. 8, and Fig. 9, too, as will be outlined hereinafter.

The encoder 10 is configured to subject the prediction residual signal to spatial-to-spectral transformation and to encode the prediction residual signal, thus obtained, into the data stream 14. Likewise, the decoder 20 is configured to decode the prediction residual signal from the data stream 14 and subject the prediction residual signal thus obtained to spectral-to-spatial transformation.

Internally, the encoder 10 may comprise a prediction residual signal former 22 which generates a prediction residual 24 so as to measure a deviation of a prediction signal 26 from the original signal, i.e. from the picture 12. The prediction residual signal former 22 may, for instance, be a subtractor which subtracts the prediction signal from the original signal, i.e. from the picture 12. The encoder 10 then further comprises a transformer 28 which subjects the prediction residual signal 24 to a spatial-to-spectral transformation to obtain a spectral-domain prediction residual signal 24' which is then subject to quantization by a quantizer 32, also comprised by the encoder 10. The thus quantized prediction residual signal 24" is coded into bitstream 14. To this end, encoder 10 may optionally comprise an entropy coder 34 which entropy codes the prediction residual signal as transformed and quantized into data stream 14. The prediction signal 26 is generated by a prediction stage 36 of encoder 10 on the basis of the prediction residual signal 24" encoded into, and decodable from, data stream 14. To this end, the prediction stage 36 may internally, as is shown in Fig. 8, comprise a dequantizer 38 which dequantizes prediction residual signal 24" so as to gain spectral-domain prediction residual signal 24''', which corresponds to signal 24' except for quantization loss, followed by an inverse transformer 40 which subjects the latter prediction residual signal 24''' to an inverse transformation, i.e. a spectral-to-spatial transformation, to obtain prediction residual signal 24'''', which corresponds to the original prediction residual signal 24 except for quantization loss. A combiner 42 of the prediction stage 36 then recombines, such as by addition, the prediction signal 26 and the prediction residual signal 24'''' so as to obtain a reconstructed signal 46, i.e. a reconstruction of the original signal 12. Reconstructed signal 46 may correspond to signal 12'. A prediction module 44 of prediction stage 36 then generates the prediction signal 26 on the basis of signal 46 by using, for instance, spatial prediction, i.e. intra-picture prediction, and/or temporal prediction, i.e. inter-picture prediction.

Likewise, decoder 20, as shown in Fig. 9, may be internally composed of components corresponding to, and interconnected in a manner corresponding to, prediction stage 36. In particular, entropy decoder 50 of decoder 20 may entropy decode the quantized spectral-domain prediction residual signal 24" from the data stream, whereupon dequantizer 52, inverse transformer 54, combiner 56 and prediction module 58, interconnected and cooperating in the manner described above with respect to the modules of prediction stage 36, recover the reconstructed signal on the basis of prediction residual signal 24" so that, as shown in Fig. 9, the output of combiner 56 results in the reconstructed signal, namely picture 12'.

Although not specifically described above, it is readily clear that the encoder 10 may set some coding parameters including, for instance, prediction modes, motion parameters and the like, according to some optimization scheme such as, for instance, in a manner optimizing some rate and distortion related criterion, i.e. coding cost. For example, encoder 10 and decoder 20 and the corresponding modules 44, 58, respectively, may support different prediction modes such as intra-coding modes and inter-coding modes. The granularity at which encoder and decoder switch between these prediction mode types may correspond to a subdivision of picture 12 and 12', respectively, into coding segments or coding blocks. In units of these coding segments, for instance, the picture may be subdivided into blocks being intra-coded and blocks being inter-coded. Intra-coded blocks are predicted on the basis of a spatial, already coded/decoded neighborhood of the respective block as is outlined in more detail below. Several intra-coding modes may exist and be selected for a respective intra-coded segment including directional or angular intra-coding modes according to which the respective segment is filled by extrapolating the sample values of the neighborhood along a certain direction which is specific for the respective directional intra-coding mode, into the respective intra-coded segment. The intra-coding modes may, for instance, also comprise one or more further modes such as a DC coding mode, according to which the prediction for the respective intra-coded block assigns a DC value to all samples within the respective intra-coded segment, and/or a planar intra-coding mode according to which the prediction of the respective block is approximated or determined to be a spatial distribution of sample values described by a two-dimensional linear function over the sample positions of the respective intra-coded block with driving tilt and offset of the plane defined by the two-dimensional linear function on the basis of the neighboring samples. Compared thereto, inter-coded blocks may be predicted, for instance, temporally. For inter-coded blocks, motion vectors may be signaled within the data stream, the motion vectors indicating the spatial displacement of the portion of a previously coded picture of the video to which picture 12 belongs, at which the previously coded/decoded picture is sampled in order to obtain the prediction signal for the respective inter-coded block. This means, in addition to the residual signal coding comprised by data stream 14, such as the entropy-coded transform coefficient levels representing the quantized spectral-domain prediction residual signal 24", data stream 14 may have encoded thereinto coding mode parameters for assigning the coding modes to the various blocks, prediction parameters for some of the blocks, such as motion parameters for inter-coded segments, and optional further parameters such as parameters for controlling and signaling the subdivision of picture 12 and 12', respectively, into the segments. The decoder 20 uses these parameters to subdivide the picture in the same manner as the encoder did, to assign the same prediction modes to the segments, and to perform the same prediction to result in the same prediction signal.

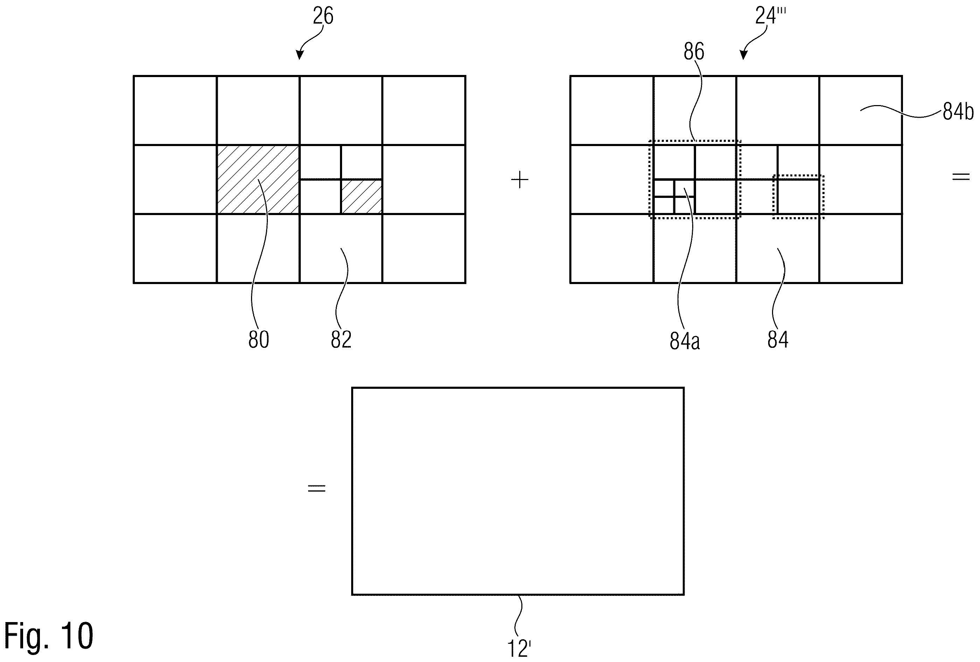

Fig. 10 illustrates the relationship between the reconstructed signal, i.e. the reconstructed picture 12', on the one hand, and the combination of the prediction residual signal 24'''' as signaled in the data stream 14, and the prediction signal 26, on the other hand. As already denoted above, the combination may be an addition. The prediction signal 26 is illustrated in Fig. 10 as a subdivision of the picture area into intra-coded blocks which are illustratively indicated using hatching, and inter-coded blocks which are illustratively indicated not-hatched. The subdivision may be any subdivision, such as a regular subdivision of the picture area into rows and columns of square blocks or non-square blocks, or a multi-tree subdivision of picture 12 from a tree root block into a plurality of leaf blocks of varying size, such as a quadtree subdivision or the like, wherein a mixture thereof is illustrated in Fig. 10 in which the picture area is first subdivided into rows and columns of tree root blocks which are then further subdivided in accordance with a recursive multi-tree subdivisioning into one or more leaf blocks.

Again, data stream 14 may have an intra-coding mode coded thereinto for intra-coded blocks 80, which assigns one of several supported intra-coding modes to the respective intra-coded block 80. For inter-coded blocks 82, the data stream 14 may have one or more motion parameters coded thereinto. Generally speaking, inter-coded blocks 82 are not restricted to being temporally coded. Alternatively, inter-coded blocks 82 may be any block predicted from previously coded portions beyond the current picture 12 itself, such as previously coded pictures of a video to which picture 12 belongs, or picture of another view or an hierarchically lower layer in the case of encoder and decoder being scalable encoders and decoders, respectively.

The prediction residual signal 24'''' in Fig. 10 is also illustrated as a subdivision of the picture area into blocks 84. These blocks might be called transform blocks in order to distinguish same from the coding blocks 80 and 82. In effect, Fig. 10 illustrates that encoder 10 and decoder 20 may use two different subdivisions of picture 12 and picture 12', respectively, into blocks, namely one subdivisioning into coding blocks 80 and 82, respectively, and another subdivision into transform blocks 84. Both subdivisions might be the same, i.e. each coding block 80 and 82, may concurrently form a transform block 84, but Fig. 10 illustrates the case where, for instance, a subdivision into transform blocks 84 forms an extension of the subdivision into coding blocks 80, 82 so that any border between two blocks of blocks 80 and 82 overlays a border between two blocks 84, or alternatively speaking each block 80, 82 either coincides with one of the transform blocks 84 or coincides with a cluster of transform blocks 84. However, the subdivisions may also be determined or selected independent from each other so that transform blocks 84 could alternatively cross block borders between blocks 80, 82. As far as the subdivision into transform blocks 84 is concerned, similar statements are thus true as those brought forward with respect to the subdivision into blocks 80, 82, i.e. the blocks 84 may be the result of a regular subdivision of picture area into blocks (with or without arrangement into rows and columns), the result of a recursive multi-tree subdivisioning of the picture area, or a combination thereof or any other sort of blockation. Just as an aside, it is noted that blocks 80, 82 and 84 are not restricted to being of quadratic, rectangular or any other shape.

Fig. 10 further illustrates that the combination of the prediction signal 26 and the prediction residual signal 24″″ directly results in the reconstructed signal 12'. However, it should be noted that more than one prediction signal 26 may be combined with the prediction residual signal 24″″ to result into picture 12' in accordance with alternative embodiments.

In Fig. 10, the transform blocks 84 shall have the following significance. Transformer 28 and inverse transformer 54 perform their transformations in units of these transform blocks 84. For instance, many codecs use some sort of DST or DCT for all transform blocks 84. Some codecs allow for skipping the transformation so that, for some of the transform blocks 84, the prediction residual signal is coded in the spatial domain directly. However, in accordance with embodiments described below, encoder 10 and decoder 20 are configured in such a manner that they support several transforms. For example, the transforms supported by encoder 10 and decoder 20 could comprise:

- DCT-II (or DCT-III), where DCT stands for Discrete Cosine Transform
- DST-IV, where DST stands for Discrete Sine Transform
- DCT-IV
- DST-VII
- Identity Transformation (IT)

Naturally, while transformer 28 would support all of the forward transform versions of these transforms, the decoder 20 or inverse transformer 54 would support the corresponding backward or inverse versions thereof:

- Inverse DCT-II (or inverse DCT-III)
- Inverse DST-IV
- Inverse DCT-IV
- Inverse DST-VII
- Identity Transformation (IT)

The subsequent description provides more details on which transforms could be supported by encoder 10 and decoder 20. In any case, it should be noted that the set of supported transforms may comprise merely one transform such as one spectral-to-spatial or spatial-to-spectral transform.

As already outlined above, Fig. 8, Fig. 9 and Fig. 10 have been presented as an example where the inventive concept described further below may be implemented in order to form specific examples for encoders and decoders according to the present application. Insofar, the encoder and decoder of Fig. 8, and Fig. 9, respectively, may represent possible implementations of the encoders and decoders described herein below. Fig. 8, and Fig. 9 are, however, only examples. An encoder according to embodiments of the present application may, however, perform block-based encoding of a picture 12 using the concept outlined in more detail below and being different from the encoder of Fig. 8 such as, for instance, in that same is no video encoder, but a still picture encoder, in that same does not support inter-prediction, or in that the sub-division into blocks 80 is performed in a manner different than exemplified in Fig. 10. Likewise, decoders according to embodiments of the present application may perform block-based decoding of picture 12' from data stream 14 using the coding concept further outlined below, but may differ, for instance, from the decoder 20 of Fig. 9 in that same is no video decoder, but a still picture decoder, in that same does not support intra-prediction, or in that same sub-divides picture 12' into blocks in a manner different than described with respect to Fig. 10 and/or in that same does not derive the prediction residual from the data stream 14 in transform domain, but in spatial domain, for instance.

Embodiments provide an H.264/AVC decoder, an H.264/AVC video data stream, a video encoder for providing an H.264/AVC video data stream, or an H.265/HEVC decoder, an H.265/HEVC video data stream, a video encoder for providing an H.265/HVC video data stream, or an H.266/VVC decoder, an H.266/VVC video data stream, a video encoder for providing an H.266/VVC video data stream.

In the following, embodiments of the invention are described, which may optionally be implemented in, or combined with, the framework described above. with respect to Fig. 8 to Fig. 10.

All embodiments of the invention of the present disclosure may optionally be implemented in combination with any of the four video coding variants described in the following. That is, the data stream 14 may be a data stream according to any of these variants, apparatus 20 may be configured for decoding a video from data stream 14 according to any of the three variants, and apparatus 14 may be configured for providing the data stream in accordance to any of the four variants.

The first and the second variants may optimally be combined with each other.

According to the first one of the two variants of the invention the video is decoded from the video data stream by block-based predictive and transform based residual decoding by decoding prediction residual data of a residual block into/from the video data stream.

According to the first variant, the decoding of the prediction residual data of the residual block is performed by use of context-adaptive variable length decoding by using

- a first syntax element indicating a total number of non-zero transform coefficients in a transform block representing the residual block, and a trailing-one number, indicating a number of non-zero transform coefficients having an absolute value of one when traversing the coefficients along a scan order,
- one or more second syntax elements indicating a sign of the non-zero transform coefficients having an absolute value of one when traversing the coefficients along the scan order,
- one or more third syntax elements indicating a value of the non-zero transform coefficients except for the number of non-zero transform coefficients having an absolute value of one when traversing the coefficients along the scan order,
- a fourth syntax element indicating a total number of zero-valued transform coefficient levels in the transform block from a firstly-encountered non-zero transform coefficient in the scan order onwards, and
- one or more fifth syntax elements indicting positions of the non-zero transform coefficients along the scan order by indicating a number of consecutive zero-valued transform coefficients in the scan order between in the scan order consecutively encountered non-zero transform coefficients, or,

in alternative to the use of context-adaptive variable length decoding, the decoding of the prediction residual data of the residual block is performed by use of context-adaptive binary arithmetic decoding by

- decoding a significance map which indicates positions of non-zero transform coefficients in a transform block representing the residual block by, in a forward scan traversing transform coefficients of the transform block, decoding a significance flag which indicates whether a non-zero transform coefficient is positioned at a current position, and, if so, and if the current position is not the last in the forward scan, decoding a last-significance flag which indicates whether the non-zero transform coefficient positioned at the current position is the last non-zero transform coefficient in the forward scan order, and
- decoding the non-zero transform coefficients' values sequentially in a reverse scan order, reversing the forward scan order.

According to the first one of the two variants of the invention the video is encoded into the video data stream by block-based predictive and transform based residual encoding by encoding prediction residual data of a residual block into the video data stream.

According to the first variant, the encoding of the prediction residual data of the residual block is performed by use of context-adaptive variable length encoding by using

- a first syntax element indicating a total number of non-zero transform coefficients in a transform block representing the residual block, and a trailing-one number, indicating a number of non-zero transform coefficients having an absolute value of one when traversing the coefficients along a scan order,
- one or more second syntax elements indicating a sign of the non-zero transform coefficients having an absolute value of one when traversing the coefficients along the scan order,
- one or more third syntax elements indicating a value of the non-zero transform coefficients except for the number of non-zero transform coefficients having an absolute value of one when traversing the coefficients along the scan order,
- a fourth syntax element indicating a total number of zero-valued transform coefficient levels in the transform block from a firstly-encountered non-zero transform coefficient in the scan order onwards, and
- one or more fifth syntax elements indicting positions of the non-zero transform coefficients along the scan order by indicating a number of consecutive zero-valued transform coefficients in the scan order between in the scan order consecutively encountered non-zero transform coefficients, or

in alternative to the use of context-adaptive variable length encoding, the encoding of the prediction residual data of the residual block is performed by use of context-adaptive binary arithmetic encoding by

- encoding a significance map which indicates positions of non-zero transform coefficients in a transform block representing the residual block by, in a forward scan traversing transform coefficients of the transform block, encoding a significance flag which indicates whether a non-zero transform coefficient is positioned at a current position, and, if so, and if the current position is not the last in the forward scan, encoding a last-significance flag which indicates whether the non-zero transform coefficient positioned at the current position is the last non-zero transform coefficient in the forward scan order, and

- encoding the non-zero transform coefficients' values sequentially in a reverse scan order, reversing the forward scan order.

According to the second variant, a video decoder (or apparatus for decoding a video from a video data stream) comprises a coded picture buffer (CPB) and a decoded picture buffer (DPB). The video decoder is configured to

receive a data stream having pictures of a video encoded thereinto along a coding order as a sequence of access units (AU) (e.g., the term "access unit" refers to a portion of the video data stream, which comprises the coded video data, or information, relating to one time frame of the video),

decode a current AU removed from the CPB using inter-picture prediction from a referenced reference picture stored in the DPB to acquire a decoded picture, and insert the decoded picture into the DPB,

assign to each reference picture stored in the DPB a classification as one of a short-term reference picture, a long-term reference picture and an unused-for-reference picture, read DPB mode information from the current AU,

if the DPB mode information indicates a first mode, remove one or more reference pictures classified as a short-term picture, according to a first-in-first-out (FIFO) strategy, from the DPB,

if the DPB mode information indicates a second mode, read memory management control information comprising at least one command in the current AU and execute the at least one command so as to change the classification assigned to at least one of the reference pictures stored in the DPB, and use the classification of the reference pictures in the DPB, for managing reference picture removal from the DPB.

According to the second variant, a video data stream is ought to be decoded by being fed to a decoder comprising a coded picture buffer (CPB). According to the second variant, a video encoder (or apparatus for encoding a video into a video data stream) is configured to

encode, into a data stream, pictures of a video encoded in a coding order as a sequence of access units (AU), wherein the apparatus is configured to, in encoding the AUs,

encode a current picture using inter-picture prediction from a referenced reference picture stored in a decoded picture buffer (DPB) into a current AU, and

insert a decoded version of the current picture in the DPB into the DPB,

assign to each reference picture stored in the DPB a classification as one of a short-term reference picture, a long-term reference picture and an unused-for-reference picture, write DPB mode information into the current AU,

if the DPB mode information indicates a first mode, remove one or more reference pictures classified as a short-term picture, according to a FIFO strategy, from the DPB,

if the DPB mode information indicates a second mode, write memory management control information comprising at least one command into the current AU, the command being instructive to change the classification assigned to at least one of the reference pictures stored in the DPB, wherein the classification of the reference pictures in the DPB, is used for managing reference picture removal from the DPB.

According to the third variant, the video is decoded from the video data stream by block-based predictive decoding and transform-based residual decoding by decoding prediction residual data of a residual block from the video data stream by use of context-adaptive binary arithmetic decoding of quantization indices of transform coefficients of a transform block representing the residual block and sequential dequantization of the quantization indices according to which a value of a current transform coefficient depends on a parity of quantization indices of previous quantization indices.

According to the third variant, the video is encoded into the video data stream by block based predictive encoding and transform based residual encoding by encoding the prediction residual data of a residual block into the video data stream by use of context-adaptive binary arithmetic coding of quantization indices of transform coefficients of a transform block representing the residual block and sequential quantization of the transform coefficients to obtain the quantization indices, according to which a quantizer for quantizing a current transform coefficient depends on a parity of quantization indices of previous quantization indices.

All three variants relate to a video encoder, a video decoder, a method for decoding a video, a method for encoding a video, and a video data stream as obtained by the respective encoding method.

In the following, further optional details and features of the first and second variants are described.

Embodiments of the first variant and the second variant may be compliant to H.264/AVC. Embodiments of the third variant may be compliant to H.266/VVC.

One aspect of the first and second variants relates to the handling of decoded pictures and their buffering in a decoded picture buffer, DPB.

According to an embodiment, two types of reference pictures may be distinguished: short-term and long-term. The encoder does the same in emulating the DPB fill state of the decoder at each point in time during decoding. A reference picture may be marked as "unused for reference" when it becomes no longer needed for prediction reference. The conversion among these three statuses (short-term, long-term, and unused for reference) is controlled by a decoded reference picture marking process. There are two alternative decoded reference picture marking mechanisms, the implicit sliding window process and the explicit memory management control operation (MMCO) process. For each currently decoded picture or each currently decoded AU, it is signalled in the data stream as to which process shall be used for DPB management. The sliding window process marks a short-term reference picture as "unused for reference" when the number of reference frames is equal to a given maximum number (max-num-ref-frames in SPS). The short-term reference pictures are stored in a first-in, first-out manner so that the most recently decoded short-term pictures are kept in the DPB. The explicit MMCO process is controlled via multiple MMCO commands. If this mode is selected for a current AU or currently decoded picture, the bitstream contains for this, or in this, AU one or more of these commands. An MMCO command may any of 1) mark one or more short-term or long-term reference picture as "unused for reference," 2) mark all the pictures as "unused for reference," or 3) mark the current reference picture or an existing short-term reference picture as long-term, and assign a long-term picture index to that long-term picture. The reference picture marking operations as well as any output - for sake of presentation - and removal of pictures from the DPB may be performed after a picture has been decoded.

Some possible but optional details of the reference picture marking mechanism are discussed in the following. 1) A first aspect relates to gaps in frame number and non-Existing pictures. Although not explained above, it might be that each reference picture in the DPB is associated with a frame number. Normally this number increases by one for each reference picture, but gaps in frame number may be allowed by setting a corresponding high level (such as sequence level) flag, which might be called parameter-gaps-in-frame-num-allowed-flag, to one for example in order to allow that an encoder or a MANE (media aware network element) can deliver a bitstream in which the frame numbers increase by more than one for a reference picture relative to the preceding reference picture in decoding order. This might be favourable in order to support temporal scalability. A sequence of AUs with gaps in the frame numbers may be received, and non-existing pictures to fill the gap may be created. The non-existing pictures are assigned with frame number values in the gap and are considered as reference pictures during decoded reference picture marking, but will not be used for output (hence not displayed). The non-existing pictures ensure that the status of the DPB, with respect to the frame numbers of the pictures residing in it, is the same for a decoder that received the pictures as for a decoder that did not receive the pictures.

Another possible aspect of the first and second variants relates to the loss of a reference picture when using sliding Window. When a reference picture is lost, it may be possible to conceal the picture and to possibly report the loss to the encoder if a feedback channel is available given that the loss is detected. If gaps in frame number are disallowed, a discontinuity in the frame number values indicates an unintentional loss of a reference picture. If gaps in frame number are allowed, a discontinuity in frame number values may be caused by either intentional removal of temporal layers or subsequences or an accidental picture loss, and decoders should infer a picture loss only if a non-existing picture is referred in the inter prediction process. The picture order count of a concealed picture may not be known which can cause the decoder to use incorrect reference pictures without detecting any errors when decoding B-pictures.

An even further possible aspect of the first and second variants relates to the loss of a reference picture with MMCO. When losing a reference picture that contains an MMCO command marking a short-term reference picture as "unused for reference," then the status of reference pictures in the DPB becomes incorrect and consequently, reference picture lists for a few pictures following the lost picture may become incorrect. If a picture containing MMCO commands related to long- term reference pictures is lost there is a risk that the number of long-term reference pictures in the DPB is different from what it would have been if the picture was received, resulting in an "incorrect" sliding window process for all the following pictures. That is, the encoder and decoder may contain a different number of short-term reference pictures resulting in out- of-sync behaviour of the sliding window process. What makes the situation even worse is that a decoder will not necessarily know that the sliding window process is out-of-sync.

In the following, MMCO commands are shown. One or more or all of the commands may apply to yield in different embodiments:

| memory_management_control_operation | Memory Management Control Operation |
|---|---|
| 0 | End memory_management_control_operation syntax element loop |
| 1 | Mark a short-term reference picture as "unused for reference" |
| 2 | Mark a long-term reference picture as "unused for reference" |
| 3 | Mark a short-term reference picture as "used for long-term reference" and assign a long-term frame index to it |

(continued)

| memory_management_control_operation | Memory Management Control Operation |
|---|---|
| 4 | Specify the maximum long-term frame index and mark all long-term reference pictures having long-term frame indices greater than the maximum value as "unused for reference" |
| 5 | Mark all reference pictures as "unused for reference" and set the MaxLongTermFrameIdx variable to "no long-term frame indices" |
| 6 | Mark the current picture as "used for long-term reference" and assign a long-term frame index to it |

A further option for the implementation of decoder and encoder according to the first and second variants is described now, may optionally be combined with the one concerning the DPB management described before, and relates to entropy decoding of some syntax element such as the residual data in form of transform coefficients into the bitstream. Lossless entropy coding of lossy quantized transform coefficients is a crucial part of an efficient video codec. One such method is referred to as context-adaptive-variable-length-coding (CAVLC) in which the encoder switches between different variable length code (VLC) tables for various syntax elements, depending on the values of the previously transmitted syntax elements in the same slice in a context-adaptive fashion. Encoder and decoder may use the CAVLC. Due to the fact that each syntax element is coded into the bitstream by writing a corresponding codeword into the bitstream which has been selected for that syntax element from the context-adaptively selected code table, each CAVLC encoded bit in the bitstream can be associated to a single syntax element. The relevant information about the transform coefficient levels in scan order to be present in bitstream is, thus, available in a direct accessible form as syntax elements when CAVLC is used. Encoder and decoder may use CAVLC to signal the transform coefficients in the bitstream.

The following syntax elements may be used, e.g. syntax elements having the following semantics:

- One syntax element indicating the total number of non-zero transform coefficient levels in a transform block (as indicated by CoeffToken)
- One or more syntax elements indicating the number of trailing one transform coefficient levels (as indicated by CoeffToken), e.g. a run of syntax elements occurring at the end of scanning the syntax elements in a scan order up to the last non-zero syntax element which are all one, and their sign (as indicated by trailing_ones_sign_flag)
- One or more syntax element per non-zero transform coefficient except the trailing one transform coefficients, which indicates the transform coefficient level value
- One syntax element indicating the total number of zero-valued transform coefficient levels
- Syntax elements indicting the number of consecutive transform coefficient levels in scan order with zero value from a current scan position onwards before a non-zero valued transform coefficient level is encountered.

It might alternatively or additionally be that the encoder might select between the usage of CABAC, thus context-adaptive binary arithmetic coding, and CAVLC and signal the selection in the bitstream and that the decoder reads this signal and uses the indicated way of decoding the residual data.

A further option for the implementation of decoder and encoder according to the first and second variants is described now, may optionally be combined with any of the one concerning the DPB management and the one concerning CAVLC described before, and relates to a quarter pel interpolation filter. In order to allow inter-prediction at a finer granularity than the regular full-pel sample grid, a sample interpolation process is used to derive sample values at sub-pel sample positions which can range from half-pel positions to quarter-pel position. One method to carry out quarter-pel interpolation may be used by encoder and decoder and is as follows. First, a 6-tap FIR filter is used to generate sample values at half-pel positions followed by an averaging of the generated half-pel position sample values through interpolation to generate sample values at quarter-pel position for luma components.

Further embodiments according to the first and second variants are described in the following:
According to an embodiment, the apparatus may further comprise a decoded picture buffer (DPB) and be configured to decode a current AU using inter-picture prediction from a referenced reference picture stored in the DPB to obtain a decoded picture, and insert the decoded picture into the DPB, assign to each reference picture stored in the DPB a classification as one of a short-term reference picture, a long-term reference picture and an unused-for-reference picture, read DPB mode information from the current AU, if the DPB mode information indicates a first mode, remove one or more reference pictures classified as a short-term picture, according to a FIFO strategy, from the DPB, if the DPB mode information indicates a second mode, read memory management control information comprising at least one command in the current AU and execute the at least one command so as to change the classification assigned to at least one of the reference pictures stored in the DPB, and use the classification of the reference pictures in the DPB, for managing reference picture removal from the DPB.

In an embodiment, the apparatus may be configured to read from the current AU an indication whether the decoded picture is not used for inter-picture prediction; perform the insertion of the decoded picture into the DPB, if the decoded picture is not indicated to be not used for inter-picture prediction or not directly to be output, and directly output the decoded picture without buffering same in the DPB, if the decoded picture is indicated to be not used for inter-picture prediction and directly to be output.

According to an embodiment, the apparatus may be configured to assign a frame index to each reference picture in the DPB, classified to be a long-term picture, and use a predetermined reference picture in the DPB, classified to be a long-term picture, as the referenced reference picture in the DPB if the frame index assigned to the predetermined reference picture is referred to in the current AU.

In an embodiment, the apparatus may be configured to one or more of: if the at least one command in the current AU is a first command, re-classify a reference picture in the DPB, classified to be a short-term reference picture, as an unused-for-reference picture, if the at least one command in the current AU is a second command, re-classify a reference picture in the DPB, classified to be a long-term reference picture, as an unused-for-reference picture, if the at least one command in the current AU is a third command, re-classify a reference picture in the DPB, classified to be a short-term picture, as a long-term reference picture, and assign a frame index to the re-classified reference picture, if the at least one command in the current AU is a fourth command, set an upper frame index limit according to the fourth command, and re-classify all reference picture in the DPB, classified to be a long-term picture, and having assigned thereto a frame index exceeding the upper frame index limit, as an unused-for-reference picture, if the at least one command in the current AU is a sixth command, classify the current picture as a long-term picture, as an unused-for-reference picture, and assign a frame index to the re-classified reference picture.

According to an embodiment, the apparatus may be configured to remove any reference picture from the DPB, which is classified as an unused-for-reference picture, and which is no longer to be output.

In an embodiment the apparatus may be configured to read an entropy coding mode indicator from the data stream, and decode prediction residual data from the current AU using a context adaptive variable length coding mode if the entropy coding mode indicator indicates the context adaptive variable length coding mode, and using a context adaptive binary arithmetic coding mode if the entropy coding mode indicator indicates the context adaptive binary arithmetic coding mode.

According to an embodiment, the apparatus may be configured to derive quarter pel values in the referenced reference picture based on a motion vector in the current AU and using 6-tap FIR filter so as to derive half-pel values and averaging neighboring half-pel values.

In an embodiment, the apparatus may be configured to:

decode a current AU using inter-picture prediction from a referenced reference picture stored in the DPB to acquire a decoded picture, and to insert the decoded picture into the DPB,
assign to each reference picture stored in the DPB a classification as one of a short-term reference picture, a long-term reference picture and an unused-for-reference picture,
read DPB mode information from the current AU,
if the DPB mode information indicates a first mode, remove one or more reference pictures classified as a short-term picture, according to a first-in-first-out (FIFO) strategy, from the DPB,
if the DPB mode information indicates a second mode, read memory management control information comprising at least one command in the current AU and execute the at least one command so as to change the classification assigned to at least one of the reference pictures stored in the DPB, and use the classification of the reference pictures in the DPB, for managing reference picture removal from the DPB.

According to an embodiment, the apparatus may be configured to:

read from the current AU an indication whether the decoded picture is not used for inter-picture prediction;
perform the insertion of the decoded picture into the DPB, if the decoded picture is not indicated to be not used for inter-picture prediction or not directly to be output, and directly output the decoded picture without buffering same in the DPB, if the decoded picture is indicated to be not used for inter-picture prediction and directly to be output.

In an embodiment, the apparatus may be configured to:

assign a frame index to each reference picture in the DPB, classified to be a long-term picture, and
use a predetermined reference picture in the DPB, classified to be a long-term picture, as the referenced reference picture in the DPB if the frame index assigned to the predetermined reference picture is referred to in the current AU.

**EP 4 734 520 A1**

According to an embodiment, the apparatus may be configured to one or more of:

if the at least one command in the current AU is a first command,
re-classify a reference picture in the DPB, classified to be a short-term reference picture, as an unused-for-reference picture,
if the at least one command in the current AU is a second command,
re-classify a reference picture in the DPB, classified to be a long-term reference picture, as an unused-for-reference picture,
if the at least one command in the current AU is a third command,
re-classify a reference picture in the DPB, classified to be a short-term picture, as a long-term reference picture, and assign a frame index to the re-classified reference picture,
if the at least one command in the current AU is a fourth command,
set an upper frame index limit according to the fourth command, and re-classify all reference picture in the DPB, classified to be a long-term picture, and having assigned thereto a frame index exceeding the upper frame index limit, as an unused-for-reference picture,
if the at least one command in the current AU is a sixth command,
classify the current picture as a long-term picture, as an unused-for-reference picture, and assign a frame index to the re-classified reference picture.

In an embodiment, the apparatus may be configured to:
remove any reference picture from the DPB, which is classified as an unused-for-reference picture, and which is no longer to be output.

In the following, further optional details and features of the third variant are described.

Multiple Reference Lines (MRL): For intra prediction, not only the adjacent line of neighboring samples can be used but also one of the two non-adjacent reference lines as the reference line for intra-picture prediction of luma samples, corresponding to the two or three lines away from the current block.

Adaptive MV Resolution (AMVR): A selection of the MV resolution at the CU level is performed. For inter predicted CUs, the selected MV resolution is indicated and can be one quarter, one half, whole integer, or four, in units of luma samples. If half luma sample resolution is selected, an alternative luma interpolation filter is used for the half-sample position in this block, i.e. different interpolation filter are used when the resolution is quarter-per or half-pel for the MV.

History-Based MV Prediction (HMVP): In addition to spatial and temporal neighbor MV predictions, a new candidate type is added for MV prediction in the merge mode and AMVP candidate list. The HMVP candidates are established using a five-entry table that is maintained and updated using a first-in-first-out (FIFO) rule. The motion vector candidates list are generated by using the spatial and temporal neighbors and HMVP candidates.

Affine Motion: An affine motion model with CU-level signaling is used for luma. The CU-level affine motion can be either a 4-parameter model or a 6-parameter model. The 4-parameter model uses two MVs, which correspond to two control points located at the top-left and top-right corners of the CU and the 6-parameter model uses three MVs, which corresponds to three control points located at the top-left, bottom-left and top-right corners. When a CU is coded in affine motion mode, the luma block of the CU is spilt into $4 \times 4$ subblocks and the MV at the central sample position of each subblock is calculated according to the affine motion model and set as the subblock MV based on the control points. The subblock MV is rounded to 1/16 luma sample precision during the calculation and a set of 6-tap interpolation filters is applied to generate the prediction of each sub- bloc. As for the case of non-affine, a merge mode and AMVP mode are used for prediction and coding of affine motion parameters.

Coefficient coding: When encoding the coefficient level, first a flag (SigFlag) is indicated, that specifies that whether coefficient level is not 0. When the flag is equal to 1 (the coeficient level is not 0) a further flag is indicated (Gt1-Flag), which indicates whether the absolute level is greater than 1, in which case (absolute level is greater than 1) two further flags are present, a parity level flag (Parity-Flag) that specifies the parity of the transform coefficient level and a further flag (Gt3-Flag) that specifies whether the absolute value of the transform coefficient level is greater than a 3.

Video decoding according to the fourth, is performed by decoding a video from the video data stream by block-based predictive and transform based residual decoding by decoding prediction residual data of an intra predicted block from the video data stream by use of context-adaptive binary arithmetic decoding by

decoding a coordinate of a position in a transform block representing the prediction residual data at which position a last non-zero transform coefficient is encountered when traversing transform coefficients of the transform block along a predetermined scan order, and
sequentially decoding values of transform coefficients including and ranked, along the predetermined scan order, between the last non-zero transform coefficient and a firstly scanned transform coefficient, and
selecting the predetermined scan order among a diagonal scan order, a horizontal scan order, and a vertical scan order depending on an intra prediction mode of the intra predicted block by use of a mapping which maps each of a plurality of intra prediction modes onto a corresponding one of the diagonal scan order, the horizontal scan order, and the vertical scan order.

Video encoding according to the fourth variant, to which the invention relates, is performed by encoding a video into the video data stream by block-based predictive and transform based residual encoding by encoding prediction residual data of an intra predicted block into the video data stream by use of context-adaptive binary arithmetic coding by

encoding a coordinate of a position in a transform block representing the prediction residual data at which a last non-zero transform coefficient is encountered when traversing transform coefficients of the transform block along a predetermined scan order, and

sequentially encoding values of transform coefficients including and ranked, along the predetermined scan order, between the last non-zero transform coefficient and a firstly scanned transform coefficient, and

selecting the predetermined scan order among a diagonal scan order, a horizontal scan order, and a vertical scan order depending on an intra prediction mode of the intra predicted block by use of a mapping which maps each of a plurality of intra prediction modes onto a corresponding one of the diagonal scan order, the horizontal scan order, and the vertical scan order.

The invention includes a video encoder, a video decoder and a method for decoding a video according to the above-described video decoding variant, and a method for encoding a video, and a video data stream as obtained by the respective encoding method according to the above-described video fourth variant.

In the following, further optional details and features of the specific video encoding and video decoding variant of embodiments of the invention are described.

Embodiments of the fourth variant may be compliant to H.265/HEVC.

PCM

The prediction, transform, quantization and entropy coding are bypassed, and the samples are directly represented by a pre-defined number of bits. When PCM is enabled the number of bits (minus1) used for representing the luma and chroma samples is indicated respectively. Besides, the minimum block sizes and maximum block sizes (as a difference to the minimum) for 2Nx2N blocks for which PCM can best used are indicated. When a 2Nx2N block is being parsed, if the sizes of that block are in between the described minimum and maximum values a flag indicates whether the PCM mode is used or not. When the PCM mode is used the PCM samples are byte aligned and luma samples of the block are directly represented/parsed in raster scan with the indicated PCM luma bit length and afterwards the chroma samples of the PCM block are represented/parsed in raster scan with the indicated PCM chroma bit length, being the first half of the chroma samples Cb and the remaining Cr samples. Furthermore, the CABAC decoding engine is terminated every time PCM flag is parsed and initialized after the decoding PCM syntax

Intra Mode Dep. Coeff. Scan Order.

The scan order of the coefficients in an intra coded block is dynamically changed based on the transform block sizes and intra modes. The scanning is carried out for each $4 \times 4$ subblocks/regions of the transform block (e.g., using only one coefficient region for the $4 \times 4$ transform block size, 4 coefficient regions for 8x8 transform blocks, 16 regions for 16x16 transform block size). The selection of the scanning method for intra modes is dependent on the transform block sizes. For transform block sizes of 16x16 and 32x32 the scanning is performed diagonally (starting at 0,0 -> 1,0 -> 0,1 -> 2,0 -> 1,1 -> 0,2 -> 3,0 and so on - e.g. decreasing the y value and increasing the x value with step 1 at each step and when y equals 0 restarting with y having a value of x+1 and setting x to 0 while starting at value 0,0). For transform block sizes of $4 \times 4$ (luma or chroma) and $8 \times 8$ (luma) the coefficient scanning order depends on the intra mode associated with a intra direction of the prediction of neighboring blocks. The vertical scan is used when the prediction direction is close to horizontal and the horizontal scan is used when the prediction direction is close to vertical. For other prediction directions, the diagonal up-right scan is used.

Transform Quantization Bypass Mode

For each coding unit, or coding block it can be indicated whether both transform and quantization are bypassed indicating that the residual signal from inter- or intra-picture prediction is directly entropy coded for that block. In that mode the in-loop filter is skipped.

Further embodiments

In the following, embodiments of the invention will be described again in more general terms. The following embodiments may optionally be combined with any of the features described above.

In the following further embodiments, the following options may apply to all of the embodiments: the data stream may be a video data stream or an audio data stream. The apparatus for decoding a data stream may be an apparatus for decoding a video from the video data stream or an apparatus for decoding an audio signal from an audio data stream. The apparatus for encoding a data stream may be an apparatus for encoding a video into a video data stream or for encoding an audio signal into an audio data stream. The payload packets may be coded video payload packets carrying video data, e.g., encoded video data. The term supplemental information packet may be used equivalently to the term supplemental information payload packet. The expression "checking a data stream on trustworthiness" and "verifying a data stream" may be used in an interchangeable manner.

The different aspects are combinable, i.e., any feature defined with respect to any of the aspects may be combined with any of the further aspects.

1. Apparatus 20 for decoding a data stream 14, the data stream comprising a plurality of payload packets 16 carrying payload data, and further comprising supplemental information packets 18, the supplemental information packets carrying supplemental information messages 19, wherein the apparatus is configured for

deriving 21, from the data stream, an indication 51, which indicates whether one or more supplemental information messages are to be considered for verifying 40 the data stream;

determining 30 a predetermined portion 13 of the data stream by, if the indication 51 indicates that the one or more supplemental information messages are to be considered for verifying the data stream, including, into the predetermined portion, the one or more supplemental information messages;

obtaining 21, from an indication in the data stream, a digital signature 43 for verifying the predetermined portion 13.

2. Apparatus according to embodiment 1, wherein the apparatus is configured for verifying the predetermined portion by checking whether the predetermined portion of the data stream fits to the digital signature.

3. Apparatus according to any of the embodiments 1 or 2, wherein the apparatus is configured for providing the predetermined portion and the digital signature for a verification of the predetermined portion.

4. Apparatus 20 for decoding a data stream 14, wherein the apparatus is configured for checking the data stream on trustworthiness, the data stream comprising a plurality of payload packets 16 carrying payload data, and further comprising supplemental information packets 18, the supplemental information packets carrying supplemental information messages 19, wherein the apparatus is configured for deriving 21, from the data stream, an indication 51, which indicates whether supplemental information messages are to be considered for verifying the data stream;

determining 30 a predetermined portion 13 of the data stream, which predetermined portion is to be verified, by, if the indication 51 indicates that supplemental information messages are to be considered for verifying the data stream, including, into the predetermined portion 13, one or more of the supplemental information messages 19;

obtaining a digital signature 43 based on the data stream 14;

checking 41 whether the predetermined portion 13 of the data stream fits to the digital signature 43.

5. Apparatus according to any of the embodiments 1 to 4, wherein the checking whether the predetermined portion 13 of the data stream fits to the digital signature 43 comprises:

subjecting the predetermined portion 13 to a hash function to obtain a hash value; and

checking whether the hash value fits to the digital signature 43.

6. Apparatus according to embodiment 5, wherein the checking whether the hash value fits to the digital signature 43 comprises:

forming a verification string 48 based on the hash value;

decrypting the digital signature 43 to obtain a check value; and

checking whether the verification string 48 matches the check value.

7. Apparatus according to any of the embodiments 1 to 6, configured for determining the predetermined portion 13 by, if the indication indicates that the one or more supplemental information messages are to be considered for verifying the predetermined portion 13, including, into the predetermined portion 13, one or more of the supplemental information packets.

8. Apparatus according to any of the embodiments 1 to 7, configured for including, into the predetermined portion 13, all of the supplemental information packets, which carry any supplemental information message to be included into the predetermined portion 13.

9. Apparatus according to any of the embodiments 1 to 8, configured for conditioning a decision whether or not to include a supplemental information packet of the supplemental information packets in the predetermined portion 13 on a result of checking, whether the supplemental information payload packet comprises a supplemental information message of any supplemental information message type out of a set of supplemental information message types.

10. Apparatus according to any of the embodiments 1 to 9, wherein the indication is a flag having a first state and a second state, and wherein the apparatus is configured for determining the predetermined portion 13 of the data stream by

if the flag has the first state, determining the one or more supplemental information messages to be included in the predetermined portion 13 based on a predefined set of supplemental information messages out of the supplemental information messages; and

if the flag has the second state, refraining from including any of the supplemental information messages in the predetermined portion 13.

11. Apparatus according to embodiment 10, wherein the predefined set of supplemental information messages comprises all supplemental information messages of the supplemental information packets referring to the plurality of payload packets 16.

12. Apparatus according to embodiment 10, wherein the predefined set of supplemental information messages comprises all supplemental information messages of any type out of a set of types of supplemental information messages.

13. Apparatus according to any of the embodiments 1 to 12, further configured for
if the indication indicates that the one or more supplemental information messages are to be considered for verifying the data stream, deriving an identification of the one or more supplemental information messages to be included in the predetermined portion 13 from the data stream.

14. Apparatus according to embodiment 13, configured for, if the indication indicates that supplemental the one or more information messages are to be considered for verifying the data stream, deriving a syntax element from the data stream, which identifies a set of types of supplemental information messages to be included in the predetermined portion 13 from the data stream.

15. Apparatus according to any of the embodiments 1 to 14, configured for deriving a syntax element from the data stream, which indicates whether the one or more supplemental information messages are to be considered for verifying the data stream and which signals an identification of the one or more supplemental information messages to be included in the predetermined portion 13.

16. Apparatus according to embodiment 15, wherein the syntax element has a plurality of first states and a second state, and wherein the apparatus is configured for

if the syntax element has one of the first states, determining the one or more supplemental information messages to be included in the predetermined portion 13 in dependence on the state of the syntax element, and

if the syntax element has the second state, refraining from including any of the one or more supplemental information messages in the predetermined portion 13.

17. Apparatus according to embodiment 13, configured for, if the indication indicates that the one or more supplemental information messages are to be considered for verifying the data stream, deriving, from the data stream, a first syntax element indicating a count of supplemental information message types to be considered for the predetermined portion 13, and a respective number of second syntax elements, each of which identifies a respective supplemental information message type to be included in the predetermined portion 13.

18. Apparatus according to embodiment 7, further configured for
conditioning a decision whether or not to include a supplemental information packet of the supplemental information packets in the predetermined portion 13 on a result of checking whether the supplemental information packet is preceded by a prefix supplemental information packet, which indicates to include the following supplemental information packet in the predetermined portion 13.

19. Apparatus according to embodiment 7, further configured for
conditioning a decision whether or not to include a supplemental information packet of the supplemental information packets in the predetermined portion 13 on a result of checking whether the supplemental information packet comprises a supplemental information message, which indicates to include the supplemental information packet in the predetermined portion 13.

20. Apparatus according to embodiment 7, further configured for
conditioning a decision whether or not to include a supplemental information message of the supplemental information messages in the predetermine portion on a result of checking whether the supplemental information message is preceded by a prefix supplemental information message, which indicates to include the following supplemental information message in the predetermined portion 13.

21. Apparatus according to embodiment 7, further configured for
conditioning a decision whether or not to include a supplemental information packet of the supplemental information packets in the predetermine portion on a result of checking whether the supplemental information packet comprises a nesting supplemental information message, which indicates to include the supplemental information packet in the predetermined portion 13.

22. Apparatus according to embodiment 7, further configured for conditioning a decision whether or not to include a supplemental information message of the supplemental information messages in the predetermine portion on a result of checking whether the supplemental information message is contained in a nesting supplemental information message, which indicates to include the supplemental information message in the predetermined portion 13.

23. Apparatus according to any of the embodiments 1 to 22, configured for, in determining the predetermined portion 13,
conditioning a decision whether or not to include a supplemental information packet of the supplemental information packets in the predetermine portion on a result of checking whether the supplemental information packet comprises any supplemental information message of a type out of a set types of supplemental information messages, which are to be included in the predetermined portion 13.

24. Apparatus according to any of the embodiments 1 to 23, configured for, in determining the predetermined portion, conditioning a decision whether or not to include a supplemental information packet of the supplemental information packets in the predetermine portion on a result of checking whether a first supplemental information message of one or more supplemental information messages carried in the supplemental information packet is one out of a set types of supplemental information messages, which are to be included in the predetermined portion 13.

25. Apparatus according to any of the embodiments 1 to 24, configured for

deriving, from the data stream, a number of portions, in units of which the data stream is verifiable, wherein the number of portions includes the predetermined portion 13; and

assigning each of the payload packets 16 to one out of the number of portions.

26. Apparatus according to embodiment 25, configured for, in determining the predetermined portion 13, if the indication indicates that the one or more supplemental information messages are to be considered for verifying the data stream, including a supplemental information message of the supplemental information messages having any type out of a set of types of supplemental information messages in the predetermined portion 13, wherein the predetermined portion 13 has a predetermined rank within an order defined among the number of portions.

27. Apparatus according to embodiment 26, wherein the predetermined rank is the highest rank within the order defined among the number of portions.

28. Apparatus according to embodiment 25, configured for, in determining the predetermined portion 13,

including, in the predetermined portion 13, the payload packets 16, which are assigned to the predetermined portion 13; and

if the indication indicates that the one or more supplemental information messages are to be considered for verifying the data stream, including, in the predetermined portion 13, a supplemental information messages of the data stream having any type out of a set of types of supplemental information messages and being associated with the payload packets 16 assigned to the predetermined portion 13.

29. Apparatus according to embodiment 25 or 28, wherein each of the supplemental information packets is associated with one of the payload packets 16, and wherein the apparatus is configured for assigning each of the supplemental information packets carrying supplemental information of any type out of a set of types of supplemental information to the portion of the one or more portion, to which the payload packet associated with the respective supplemental information packet is assigned.

30. Apparatus according to embodiment 25 or 28 or 29, configured for, in determining the predetermined portion 13, if the indication indicates that supplemental information is to be considered for verifying the data stream, deciding based on an indication in the data stream between

including all supplemental information of the data stream having any type out of a set of types of supplemental information in the predetermined portion 13, wherein the predetermined portion 13 has a predetermined rank, e.g., a highest rank, within an order defined among the number of portions, and
including, in the predetermined portion 13, all supplemental information of the data stream having any type out of a set of types of supplemental information and being associated with the payload packets 16 assigned to the predetermined portion 13.

31. Apparatus according to embodiment 25, wherein each of the supplemental information messages is associated with one of the payload packets 16, and wherein the apparatus is configured for assigning each of the supplemental information messages of the data stream having any type out of a set of types of supplemental information messages to one of the portions, which one portion is associated with a further one of the portions, the further one of the portions being associated with the payload packets 16 associated with the respective supplemental information message.

32. Apparatus according to embodiment 25, wherein each of the supplemental information packets is associated with one of the payload packets 16, and wherein the apparatus is configured for assigning each of the supplemental information packets of the data stream carrying any type out of a set of types of supplemental information messages to one of the portions, which one portion is associated with a further one of the portions, the further one of the portions being associated with the payload packets 16 associated with the respective supplemental information packet.

33. Apparatus according to embodiment 31 or 32, configured for deriving, from the data stream, a syntax element, which indicates a count of the number of portions, the syntax element having a value, wherein the apparatus is configured for inferring that the count of the number of portions corresponds to the value plus one, multiplied by two.

34. Apparatus according to embodiment 31 or 32, configured for deriving, from the data stream, a syntax element, which indicates a count of the number of portions, the syntax element having a value, wherein the apparatus is configured for
inferring that the count of the number of portions corresponds to the value plus one.

35. Apparatus according to embodiment 33 or 34, wherein the one portion and the further one of the portions are succeeding each other within a hierarchical order defined among the number of portions, e.g., the one of the portions succeeds the further one portion in the hierarchical order.

36. Apparatus according to embodiment 33 or D.34, wherein a position index of the one portion within a hierarchical order defined among the portions corresponds to a position index of the further one portion within the hierarchical order plus the half of the count of the number of portions.

37. Apparatus according to any of the embodiments 1 to 36, wherein each of the supplemental information messages is associated with one of the payload packets 16.

38. Apparatus according to any of the embodiments 1 to 37, wherein each of the supplemental information messages is associated with an associated one of the payload packets 16, the associated payload packet being part of the same picture unit or the same access unit as the supplemental information packet.

39. Apparatus according to any of the embodiments 1 to 38, configured for, in determining the predetermined portion 13, checking whether the one or more supplemental information messages to be included into the predetermined portion 13 include multiple instances of identical supplemental information messages, and
if the one or more supplemental information messages to be included into the predetermined portion 13 include multiple instances of identical supplemental information messages, including only one instance of the multiple instances of identical supplemental information messages.

40. Apparatus according to embodiment 39, configured for, in checking whether the one or more supplemental information messages to be included into the predetermined portion 13 include multiple instances of identical supplemental information messages, performing the check on a single picture unit or access unit.

41. Apparatus according to embodiment 39, configured for positioning the one instance of the multiple instances of identical supplemental information messages at a predetermined position within the predetermined portion 13.

42. Apparatus according to embodiment 41, wherein the predetermined position is defined relative to

a start position or an end position of a picture unit included in the predetermined portion 13, or

relative to a predetermined payload packet included in the predetermined portion 13, e.g., a predetermined payload packet or a predetermined supplemental information packet.

43. Apparatus according to any of embodiment 39 to 42, configured for positioning the one or more supplemental information messages to be included in the predetermined portion 13 according to a predefined order among the one or more supplemental information messages within the predetermined portion 13.

44. Apparatus 10 for encoding a data stream, wherein the apparatus is configured for rendering the data stream checkable on trustworthiness, and encoding, into the data stream, a plurality of payload packets 16 carrying payload data, and further encoding, into the data stream, supplemental information packets 18, the supplemental information packets carrying supplemental information messages, wherein the apparatus is configured for

inserting 23, into the data stream, an indication 51, which indicates whether one or more supplemental information messages are to be considered for verifying the data stream;

determining 30' a predetermined portion 13 of the data stream, which predetermined portion 13 is to be rendered checkable on trustworthiness, by, if the indication indicates that the one or more supplemental information messages are to be considered for verifying the data stream, including, into the predetermined portion 13, one or more of the supplemental information messages;

obtaining 41' a digital signature 43 based on the predetermined portion 13.

45. Apparatus according to embodiment 44, configured for, in obtaining the digital signature 43,

subjecting the predetermined portion 13 to a hash function to obtain a hash value; and

obtaining the digital signature 43 based on the hash value.

46. Apparatus according to embodiment 45, configured for, in obtaining the digital signature 43,

forming a verification string 48 based on the hash value;

signing the verification string 48 to obtain the digital signature 43.

47. Apparatus according to any of the embodiments 44 to 46, configured for
determining the predetermined portion 13 by, if the indication indicates that the one or more supplemental information messages are to be considered for verifying the predetermined portion 13, including, into the predetermined portion 13, one or more of the supplemental information packets.

48. Apparatus according to any of the embodiments 44 to 47, configured for including, into the predetermined portion 13, all of the supplemental information packets, which carry any supplemental information message to be included into the predetermined portion 13.

49. Apparatus according to any of the embodiments 44 to 48, configured for conditioning a decision whether or not to include a supplemental information packet of the supplemental information packets packet in the predetermined portion 13 on a result of checking, whether the supplemental information packet comprises a supplemental information message of any supplemental information message type out of a set of supplemental information message types.

50. Apparatus according to any of the embodiments 44 to 49, wherein the indication is a flag having a first state and a second state, and wherein the apparatus is configured for deciding between

setting the flag to the first state, and determining the one or more supplemental information messages to be included in the predetermined portion 13 based on a predefined set of supplemental information messages out of the supplemental information messages; and

setting the flag to the second state, and refraining from including any of the supplemental information messages in the predetermined portion 13.

51. Apparatus according to embodiment 50, wherein the predefined set of supplemental information messages comprises all supplemental information messages of the supplemental information packets referring to the plurality of payload packets 16.

52. Apparatus according to embodiment 50, wherein the predefined set of supplemental information messages comprises all supplemental information messages of any type out of a set of types of supplemental information messages.

53. Apparatus according to any of the embodiments 44 to 52, further configured for
if the indication indicates that the one or more supplemental information messages are to be considered for verifying the data stream, inserting an identification of the one or more supplemental information messages to be included in the predetermined portion 13 into the data stream.

54. Apparatus according to embodiment 53, configured for, if the indication indicates that the one or more supplemental information messages are to be considered for verifying the data stream, inserting a syntax element into the data stream, which identifies a set of types of supplemental information messages to be included in the predetermined portion 13 from the data stream.

55. Apparatus according to any of the embodiments 44 to 54, configured for inserting a syntax element into the data stream, which indicates whether the one or more supplemental information messages are to be considered for verifying the data stream and which signals an identification of the one or more supplemental information messages to be included in the predetermined portion 13.

56. Apparatus according to embodiment 55, wherein the syntax element has a plurality of first states and a second state, and wherein the apparatus is configured for differentiating between

setting the syntax element to one of the first states in dependence on the one or more supplemental information messages to be included in the predetermined portion 13, and

setting the syntax element to the second state and refraining from including any of the one or more supplemental information messages in the predetermined portion 13.

57. Apparatus according to embodiment 53, configured for, if the indication indicates that the one or more supplemental information messages are to be considered for verifying the data stream, inserting, into the data stream, a first syntax element indicating a count of supplemental information message types to be considered for the predetermined portion 13, and a respective number of second syntax elements, each of which identifies a respective supplemental information message type to be included in the predetermined portion 13.

58. Apparatus according to embodiment 53, further configured for conditioning a decision whether or not to include a supplemental information packet of the supplemental information packets in the predetermine portion on a result of checking whether the supplemental information packet is preceded by a prefix supplemental information packet, which indicates to include the following supplemental information packet in the predetermined portion 13.

59. Apparatus according to embodiment 47, further configured for
conditioning a decision whether or not to include a supplemental information packet of the supplemental information packets in the predetermined portion 13 on a result of checking whether the supplemental information packet comprises a supplemental information message, which indicates to include the supplemental information packet in the predetermined portion 13.

60. Apparatus according to embodiment 47, further configured for
conditioning a decision whether or not to include a supplemental information message of the supplemental information messages in the predetermine portion on a result of checking whether the supplemental information message is preceded by a prefix supplemental information message, which indicates to include the following supplemental information message in the predetermined portion 13.

61. Apparatus according to embodiment 47, further configured for
conditioning a decision whether or not to include a supplemental information packet of the supplemental information packets in the predetermine portion on a result of checking whether the supplemental information packet comprises a nesting supplemental information message, which indicates to include the supplemental information packet in the predetermined portion 13.

62. Apparatus according to embodiment 47, further configured for
conditioning a decision whether or not to include a supplemental information message of the supplemental information messages in the predetermine portion on a result of checking whether the supplemental information message is contained in a nesting supplemental information message, which indicates to include the supplemental information packet in the predetermined portion 13.

63. Apparatus according to any of the embodiments 44 to 62, configured for, in determining the predetermined portion 13,
conditioning a decision whether or not to include a supplemental information packet of the supplemental information packets in the predetermine portion on a result of checking whether the supplemental information packet comprises any supplemental information message of a type out of a set types of supplemental information messages, which are to be included in the predetermined portion 13.

64. Apparatus according to any of the embodiments 44 to 63, configured for, in determining the predetermined portion 13,
conditioning a decision whether or not to include a supplemental information packet of the supplemental information packets in the predetermine portion on a result of checking whether a first supplemental information message of one or more supplemental information messages carried in the supplemental information packet is one out of a set types of supplemental information messages, which are to be included in the predetermined portion 13.

65. Apparatus according to any of the embodiments 44 to 64, configured for providing the supplemental information packets in a manner that none of the supplemental information packets includes both a supplemental information message of one out of a set of types of supplemental information packets, which are to be included in the predetermined portion 13, and a supplemental information message of a type, which is not included in the set of types.

66. Apparatus according to any of the embodiments 44 to 65, configured for

indicating, in the data stream, a number of portions, in units of which the data stream is verifiable, wherein the number of portions includes the predetermined portion 13; and

assigning each of the payload packets 16 to one out of number of portions.

67. Apparatus according to embodiment 66, configured for, in determining the predetermined portion 13, if the indication indicates that the one or more supplemental information messages are to be considered for verifying the data stream, including a supplemental information message of the supplemental information messages having any type out of a set of types of supplemental information messages in the predetermined portion 13, wherein the predetermined portion 13 has a predetermined rank within an order defined among the number of portions.

68. Apparatus according to embodiment 67, wherein the predetermined rank is the highest rank within the order defined among the number of portions.

69. Apparatus according to embodiment 66, configured for, in determining the predetermined portion 13,

including, in the predetermined portion 13, the payload packets 16, which are assigned to the predetermined portion 13; and

if the indication indicates that the one or more supplemental information messages are to be considered for verifying the data stream, including, in the predetermined portion 13, a supplemental information messages of the data stream having any type out of a set of types of supplemental information messages and being associated with the payload packets 16 assigned to the predetermined portion 13.

70. Apparatus according to embodiment 66 or 67, wherein each of the supplemental information packets is associated with one of the payload packets 16, and wherein the apparatus is configured for assigning each of the supplemental information packets carrying supplemental information of any type out of a set of types of supplemental information to the portion of the one or more portion, to which the payload packet associated with the respective supplemental information packet is assigned.

71. Apparatus according to embodiment 66 or 67 or 68, configured for, in determining the predetermined portion 13, if the indication indicates that supplemental information is to be considered for verifying the data stream, inserting an indication in the data stream, which indication differentiates between

including all supplemental information of the data stream having any type out of a set of types of supplemental information in the predetermined portion 13, wherein the predetermined portion 13 has a predetermined rank, e.g., a highest rank, within an order defined among the number of portions, and
including, in the predetermined portion 13, all supplemental information of the data stream having any type out of a set of types of supplemental information and being associated with the payload packets 16 assigned to the predetermined portion 13.

72. Apparatus according to embodiment 66, wherein each of the supplemental information messages is associated with one of the payload packets 16, and wherein the apparatus is configured for assigning each of the supplemental information messages of the data stream having any type out of a set of types of supplemental information messages to one of the portions, which one portion is associated with a further one of the portions, the further one of the portions being associated with the payload packets 16 associated with the respective supplemental information message.

73. Apparatus according to embodiment 33, wherein each of the supplemental information packets is associated with one of the payload packets 16, and wherein the apparatus is configured for assigning each of the supplemental information packets of the data stream carrying any type out of a set of types of supplemental information messages to one of the portions, which one portion is associated with a further one of the portions, the further one of the portions being associated with the payload packets 16 associated with the respective supplemental information packet.

74. Apparatus according to embodiment 72 or 73, configured for inserting, into the data stream, a syntax element, which indicates a count of the number of portions, the syntax element having a value, wherein the apparatus is configured for setting the value to the count of the number of portions divided by two, minus one.

75. Apparatus according to embodiment 72 or 73, configured for deriving, from the data stream, a syntax element, which indicates a count of the number of portions, the syntax element having a value, wherein the apparatus is configured for
setting the value to the count of the number of portions minus one.

76. Apparatus according to embodiment 74 or 75, wherein the one portion and the further one of the portions are succeeding each other within a hierarchical order defined among the number of portions, e.g., the one of the portions succeeds the further one portion in the hierarchical order.

77. Apparatus according to embodiment 74 or 75, wherein a position index of the one portion within a hierarchical order defined among the portions corresponds to a position index of the further one portion within the hierarchical order plus the half of the count of the number of portions.

78. Apparatus according to any of the embodiments 44 to 77, wherein each of the supplemental information messages is associated with one of the payload packets 16.

79. Apparatus according to any of the embodiments 44 to 78, wherein each of the supplemental information messages is associated with an associated one of the payload packets 16, the associated payload packet being part of the same picture unit or the same access unit as the supplemental information packet.

80. Apparatus according to any of the embodiments 44 to 79, configured for, in determining the predetermined portion 13, checking whether the one or more supplemental information messages to be included into the predetermined portion 13 include multiple instances of identical supplemental information messages, and
if the one or more supplemental information messages to be included into the predetermined portion 13 include multiple instances of identical supplemental information messages, including only one instance of the multiple instances of identical supplemental information messages.

81. Apparatus according to embodiment 80, configured for, in checking whether the one or more supplemental information messages to be included into the predetermined portion 13 include multiple instances of identical supplemental information messages, performing the check on a single picture unit or access unit.

82. Apparatus according to embodiment 80, configured for positioning the one instance of the multiple instances of identical supplemental information messages at a predetermined position within the predetermined portion 13.

83. Apparatus according to embodiment 82, wherein the predetermined position is defined relative to

a start position or an end position of a picture unit included in the predetermined portion 13, or

relative to a predetermined payload packet included in the predetermined portion 13, e.g., a predetermined payload packet or a predetermined supplemental information packet.

84. Apparatus according to any of embodiment 80 to 83, configured for positioning the one or more supplemental information messages to be included in the predetermined portion 13 according to a predefined order among the one or more supplemental information messages within the predetermined portion 13.

85. Apparatus according to any of the embodiments 44 to 84, configured for, if the supplemental information packets comprise multiple instances of the same supplemental information packet, inserting the multiple instances into the data stream without being interleaved by another one of the supplemental information packets.

86. Apparatus according to any of the embodiments 44 to 85, configured for providing the data stream in a manner that, if the supplemental information messages of the data stream comprise multiple instances of a first one of the supplemental information messages and multiple instances of a second one of the supplemental information messages, each one instance of the first supplemental information messages and of the second supplemental information message are included in one of the supplemental information packets.

87. Method for decoding a data stream 14, the data stream comprising a plurality of payload packets 16 carrying payload data, and further comprising supplemental information packets 18, the supplemental information packets carrying supplemental information messages 19, wherein the method comprises

deriving 21, from the data stream, an indication 51, which indicates whether one or more supplemental information messages are to be considered for verifying 40 the data stream;

determining 30 a predetermined portion 13 of the data stream by, if the indication 51 indicates that the one or more supplemental information messages are to be considered for verifying the data stream, including, into the predetermined portion, the one or more supplemental information messages;

obtaining 21, from an indication in the data stream, a digital signature 43 for verifying the predetermined portion 13.

88. Method for decoding a data stream 14, wherein the method comprises checking the data stream on trustworthiness, the data stream comprising a plurality of payload packets 16 carrying payload data, and further comprising supplemental information packets 18, the supplemental information packets carrying supplemental information messages 19, wherein the method comprises

deriving 21, from the data stream, an indication 51, which indicates whether supplemental information messages are to be considered for verifying the data stream;

determining 30 a predetermined portion 13 of the data stream, which predetermined portion is to be verified, by, if the indication 51 indicates that supplemental information messages are to be considered for verifying the data stream, including, into the predetermined portion 13, one or more of the supplemental information messages 19;

obtaining a digital signature 43 based on the data stream 14;

checking 41 whether the predetermined portion 13 of the data stream fits to the digital signature 43.

89. Method for encoding a data stream, wherein the method comprises rendering the data stream checkable on trustworthiness, and encoding, into the data stream, a plurality of payload packets 16 carrying payload data, and further encoding, into the data stream, supplemental information packets, the supplemental information packets carrying supplemental information messages, wherein the method comprises

inserting 23, into the data stream, an indication, which indicates whether one or more supplemental information messages are to be considered for verifying the data stream;

determining 30' a predetermined portion 13 of the data stream, which predetermined portion 13 is to be rendered checkable on trustworthiness, by, if the indication indicates that the one or more supplemental information messages are to be considered for verifying the data stream, including, into the predetermined portion 13, one or more of the supplemental information messages;

obtaining a digital signature 43 based on the predetermined portion 13.

90. Data stream having a data signal encoded thereinto, the data stream being checkable on trustworthiness, the data stream comprising:

a plurality of payload packets 16 carrying payload data, and further comprising supplemental information packets, the supplemental information packets carrying supplemental information messages; and

an indication, which indicates whether one or more supplemental information messages are to be considered for trustworthiness of the data stream.

91. Data stream according to embodiment 90., wherein the data stream is provided using the method of embodiment 89.

92. Apparatus according to any of the embodiments 1 to 43, wherein the data stream has a video encoded thereinto, and wherein the apparatus is configured for decoding the video from the data stream by block based predictive and transform based residual decoding by

decoding prediction residual data of a residual block from the data stream by use of context-adaptive variable length decoding by using

a first syntax element indicating a total number of non-zero transform coefficients in a transform block representing the residual block, and a trailing-one number, indicating a number of non-zero transform coefficients having an absolute value of one when traversing the coefficients along a scan order,

one or more second syntax elements indicating a sign of the non-zero transform coefficients having an absolute value of one when traversing the coefficients along the scan order,

one or more third syntax elements indicating a value of the non-zero transform coefficients except for the number of non-zero transform coefficients having an absolute value of one when traversing the coefficients along the scan order,

a fourth syntax element indicating a total number of zero-valued transform coefficient levels in the transform block from a firstly-encountered non-zero transform coefficient in the scan order onwards, and

one or more fifth syntax elements indicting positions of the non-zero transform coefficients along the scan order by indicating a number of consecutive zero-valued transform coefficients in the scan order between in the scan order consecutively encountered non-zero transform coefficients.

93. Apparatus according to any of the embodiments 1 to 43, wherein the data stream has a video encoded thereinto, and wherein the apparatus is configured for decoding the video from the data stream by block based predictive and transform based residual decoding by

decoding prediction residual data of a residual block from the data stream by use of context-adaptive binary arithmetic decoding by

decoding a significance map which indicates positions of non-zero transform coefficients in a transform block representing the residual block by, in a forward scan traversing transform coefficients of the transform block, decoding a significance flag which indicates whether a non-zero transform coefficient is positioned at a current position, and, if so, and if the current position is not the last in the forward scan, decoding a last-significance flag which indicates whether the non-zero transform coefficient positioned at the current position is the last non-zero transform coefficient in the forward scan order, and

decoding the non-zero transform coefficients' values sequentially in a reverse scan order, reversing the forward scan order.

94. Apparatus according to any of the embodiments 1 to 43, wherein the data stream has a video encoded thereinto, and wherein the apparatus is configured for decoding the video from the data stream by block based predictive decoding and transform based residual decoding by

decoding prediction residual data of an intra predicted block from the data stream by use of context-adaptive binary arithmetic decoding by

decoding a coordinate of a position in a transform block representing the prediction residual data at which position a last non-zero transform coefficient is encountered when traversing transform coefficients of the transform block along a predetermined scan order, and

sequentially decoding values of transform coefficients including and ranked, along the predetermined scan order, between the last non-zero transform coefficient and a firstly scanned transform coefficient, and

selecting the predetermined scan order among a diagonal scan order, a horizontal scan order, and a vertical scan order depending on an intra prediction mode of the intra predicted block by use of a mapping which maps each of a plurality of intra prediction modes onto a corresponding one of the diagonal scan order, the horizontal scan order, and the vertical scan order.

95. Apparatus according to any of the embodiments 1 to 43, wherein the data stream has a video encoded thereinto, and wherein the apparatus is configured for decoding the video from the data stream by block-based predictive decoding and transform-based residual decoding by

decoding prediction residual data of a residual block from the data stream by use of context-adaptive binary arithmetic decoding of quantization indices of transform coefficients of a transform block representing the residual block and sequential dequantization of the quantization indices according to which a value of a current transform coefficient depends on a parity of quantization indices of previous quantization indices.

96. Apparatus according to any of the embodiments 44 to 86, wherein the apparatus is an encoder configured for encoding a video into the data stream by block-based predictive coding and transform-based residual coding by encoding prediction residual data of a residual block into the data stream by use of context adaptive variable length coding by using

a first syntax element indicating a total number of non-zero transform coefficients in a transform block representing the residual block, and a trailing-one number, indicating a number of non-zero transform coefficients having an absolute value of one when traversing the coefficients along a scan order,
one or more second syntax elements indicating a sign of the non-zero transform coefficients having an absolute value of one when traversing the coefficients along the scan order,
one or more third syntax elements indicating a value of the non-zero transform coefficients except for the number of non-zero transform coefficients having an absolute value of one when traversing the coefficients along the scan order,
a fourth syntax element indicating a total number of zero-valued transform coefficient levels in the transform block from a firstly-encountered non-zero transform coefficient in the scan order onwards, and
one or more fifth syntax elements indicting positions of the non-zero transform coefficients along the scan order by indicating a number of consecutive zero-valued transform coefficients in the scan order between in the scan order consecutively encountered non-zero transform coefficients.

97. Apparatus according to any of the embodiments 44 to 86, wherein the apparatus is an encoder configured for encoding a video into the data stream by block-based predictive coding and transform-based residual coding by encoding prediction residual data of a residual block into the data stream by use of context-adaptive binary arithmetic coding by

encoding a significance map which indicates positions of non-zero transform coefficients in a transform block representing the residual block by, in a forward scan traversing transform coefficients of the transform block, encoding a significance flag which indicates whether a non-zero transform coefficient is positioned at a current position, and, if so, and if the current position is not the last in the forward scan, encoding a last-significance flag which indicates whether the non-zero transform coefficient positioned at the current position is the last non-zero transform coefficient in the forward scan order, and
encoding the non-zero transform coefficients' values sequentially in a reverse scan order, reversing the forward scan order.

98. Apparatus according to any of the embodiments 44 to 86, wherein the apparatus is configured for encoding a video into the data stream by block-based predictive coding and transform-based residual coding by
encoding prediction residual data of an intra predicted block into the data stream by use of context-adaptive binary arithmetic coding by

encoding a coordinate of a position in a transform block representing the prediction residual data at which a last non-zero transform coefficient is encountered when traversing transform coefficients of the transform block along a predetermined scan order, and

sequentially encoding values of transform coefficients including and ranked, along the predetermined scan order, between the last non-zero transform coefficient and a firstly scanned transform coefficient, and

selecting the predetermined scan order among a diagonal scan order, a horizontal scan order, and a vertical scan order depending on an intra prediction mode of the intra predicted block by use of a mapping which maps each of a plurality of intra prediction modes onto a corresponding one of the diagonal scan order, the horizontal scan order, and the vertical scan order.

99. Apparatus according to any of the embodiments 44 to 86, wherein the apparatus is configured for encoding a video into the data stream by block based predictive encoding and transform based residual encoding by
encoding prediction residual data of a residual block into the data stream by use of context-adaptive binary arithmetic coding of quantization indices of transform coefficients of a transform block representing the residual block and sequential quantization of the transform coefficients to obtain the quantization indices, according to which a quantizer for quantizing a current transform coefficient depends on a parity of quantization indices of previous quantization indices.

100. Apparatus according to any of the embodiments 1 to 43, or embodiments 44 to 86, wherein the data stream has a video encoded thereinto by block-based predictive coding and transform-based residual coding by encoding prediction residual data of the residual block into the data stream by use of context adaptive variable length coding by using

a first syntax element indicating a total number of non-zero transform coefficients in a transform block representing the residual block, and a trailing-one number, indicating a number of non-zero transform coefficients having an absolute value of one when traversing the coefficients along a scan order,
one or more second syntax elements indicating a sign of the non-zero transform coefficients having an absolute value of one when traversing the coefficients along the scan order,
one or more third syntax elements indicating a value of the non-zero transform coefficients except for the number of non-zero transform coefficients having an absolute value of one when traversing the coefficients along the scan order,
a fourth syntax element indicating a total number of zero-valued transform coefficient levels in the transform block from a firstly-encountered non-zero transform coefficient in the scan order onwards, and
one or more fifth syntax elements indicting positions of the non-zero transform coefficients along the scan order by indicating a number of consecutive zero-valued transform coefficients in the scan order between in the scan order consecutively encountered non-zero transform coefficients.

101. Apparatus according to any of the embodiments 1 to 43, or embodiments 44 to 86, wherein the data stream has a video encoded thereinto by block-based predictive coding and transform-based residual coding by encoding prediction residual data of a residual block into the data stream by by use of context-adaptive binary arithmetic coding by

encoding a significance map which indicates positions of non-zero transform coefficients in a transform block representing the residual block by, in a forward scan traversing transform coefficients of the transform block, encoding a significance flag which indicates whether a non-zero transform coefficient is positioned at a current position, and, if so, and if the current position is not the last in the forward scan, encoding a last-significance flag which indicates whether the non-zero transform coefficient positioned at the current position is the last non-zero transform coefficient in the forward scan order, and
encoding the non-zero transform coefficients' values sequentially in a reverse scan order, reversing the forward scan order.

102. Apparatus according to any of the embodiments 1 to 43, or embodiments 44 to 86, wherein the data stream has a video encoded thereinto by block-based predictive coding and transform-based residual coding by encoding prediction residual data of an intra predicted block into the data stream by use of context-adaptive binary arithmetic coding by

encoding a coordinate of a position in a transform block representing the prediction residual data at which a last non-zero transform coefficient is encountered when traversing transform coefficients of the transform block along a predetermined scan order, and

sequentially encoding values of transform coefficients including and ranked, along the predetermined scan order, between the last non-zero transform coefficient and a firstly scanned transform coefficient, and

selecting the predetermined scan order among a diagonal scan order, a horizontal scan order, and a vertical scan order depending on an intra prediction mode of the intra predicted block by use of a mapping which maps each of a plurality of intra prediction modes onto a corresponding one of the diagonal scan order, the horizontal scan order, and the vertical scan order.

103. Apparatus according to any of the embodiments 1 to 43, or embodiments 44 to 86, wherein the data stream has a video encoded thereinto by block based predictive encoding and transform based residual encoding by encoding prediction residual data of a residual block into the data stream by use of context-adaptive binary arithmetic coding of quantization indices of transform coefficients of a transform block representing the residual block and sequential quantization of the transform coefficients to obtain the quantization indices, according to which a quantizer for quantizing a current transform coefficient depends on a parity of quantization indices of previous quantization indices.

104. Data stream, generated using the method of embodiment 89.

105. Computer program for implementing the method of embodiment 87, or embodiment 88, or embodiment 89, when being executed on a computer or signal processor.

Implementation alternatives

Although some aspects have been described as features in the context of an apparatus it is clear that such a description may also be regarded as a description of corresponding features of a method. Although some aspects have been described as features in the context of a method, it is clear that such a description may also be regarded as a description of corresponding features concerning the functionality of an apparatus. In particular, block diagrams illustrating the functionality of an apparatus may also be understood as illustration of a respective method comprising the functions described by the blocks of the block diagram as steps of the method.

The data signal or data stream (e.g., media data stream, video data stream, audio data stream) provided by embodiments of the invention can be stored on a digital storage medium, e.g., a non-transitory or transitory digital storage medium, or can be transmitted on a transmission medium such as a wireless transmission medium or a wired transmission medium. In other words, further embodiments provide a computer product, e.g., a data stream product or bitstream product, e.g., a non-transitory digital storage medium, the computer product including, e.g., having stored thereon, the data signal or data stream according to any of the herein described embodiments.

Further embodiments provide a method for storing data, the method comprising a step of storing a data stream on a digital storage medium, e.g., a non-transitory digital storage medium, the data stream carrying the data. For example, the data stream is in accordance with any of the embodiments described herein. For example, has the data encoded thereinto according to any of the encoding methods described herein.

Further embodiments provide a method for transmitting a data stream of any of the embodiments described herein.

Features described with respect to an apparatus for receiving or processing a signal (e.g., receiver, decoder) are to be understood to serve as a description of a respective feature for an apparatus for providing the signal (e.g., an encoder) and vice versa, and as a feature of a respective signal, e.g., a data stream. In particular, the skilled person will understand that any information, e.g., a data type, structure, item, which is to be received by the receiver, or derived from the signal by the receiver, is inserted into the signal by a corresponding provider, and vice versa.

Some or all of the method steps may be executed by (or using) a hardware apparatus, like for example, a microprocessor, a programmable computer or an electronic circuit. In some embodiments, one or more of the method steps may be executed by such an apparatus.

Depending on certain implementation requirements, embodiments of the invention can be implemented in hardware or in software or at least partially in hardware or at least partially in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The methods described herein may be performed using a hardware apparatus, or using a computer, or using a combination of a hardware apparatus and a computer.

In the foregoing Detailed Description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example.

Thus the following claims are hereby incorporated into the Detailed Description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

The above-described embodiments are merely illustrative for the principles of the present disclosure. It is understood that modifications and variations of the arrangements and the details described herein will be apparent to others skilled in the art. It is the intent, therefore, to be limited only by the scope of the pending patent claims and not by the specific details presented by way of description and explanation of the embodiments herein.

## Claims

1.  Apparatus (20) for decoding an audio data stream (14) having an audio signal encoded thereinto, the audio data stream comprising a plurality of payload packets (16) carrying payload data, and further comprising supplemental information packets (18), the supplemental information packets carrying supplemental information messages (19), wherein the apparatus is configured for

    deriving (21), from the audio data stream, an indication (51), which indicates whether one or more supplemental information messages are to be considered for verifying (40) the audio data stream;
    determining (30) a predetermined portion (13) of the audio data stream by, if the indication (51) indicates that the one or more supplemental information messages are to be considered for verifying the audio data stream, including, into the predetermined portion, the one or more supplemental information messages;
    obtaining (21), from an indication in the audio data stream, a digital signature (43) for verifying the predetermined portion (13).

2.  Apparatus according to claim 1, wherein the apparatus is configured for providing the predetermined portion and the digital signature for a verification of the predetermined portion the digital signature.

3.  Apparatus according to any of the claims 1 or 2, wherein the checking whether the predetermined portion (13) of the audio data stream fits to the digital signature (43) comprises:

    subjecting the predetermined portion (13) to a hash function to obtain a hash value; and
    checking whether the hash value fits to the digital signature (43).

4.  Apparatus according to any of the claims 1 to 3, configured for determining the predetermined portion (13) by, if the indication indicates that the one or more supplemental information messages are to be considered for verifying the predetermined portion (13), including, into the predetermined portion (13), one or more of the supplemental information packets.

5. Apparatus according to any of the claims 1 to 4, configured for including, into the predetermined portion (13), all of the supplemental information packets, which carry any supplemental information message to be included into the predetermined portion (13).

6. Apparatus according to any of the claims 1 to 5, configured for conditioning a decision whether or not to include a supplemental information packet of the supplemental information packets in the predetermined portion (13) on a result of checking, whether the supplemental information payload packet comprises a supplemental information message of any supplemental information message type out of a set of supplemental information message types.

7. Apparatus according to any of the claims 1 to 6, wherein the indication is a flag having a first state and a second state, and wherein the apparatus is configured for determining the predetermined portion (13) of the audio data stream by

    if the flag has the first state, determining the one or more supplemental information messages to be included in the predetermined portion (13) based on a predefined set of supplemental information messages out of the supplemental information messages; and
    if the flag has the second state, refraining from including any of the supplemental information messages in the predetermined portion (13).

8. Apparatus according to any of the claims 1 to 7, further configured for
if the indication indicates that the one or more supplemental information messages are to be considered for verifying the audio data stream, deriving an identification of the one or more supplemental information messages to be included in the predetermined portion (13) from the audio data stream.

9. Apparatus according to claim 8, configured for, if the indication indicates that supplemental the one or more information messages are to be considered for verifying the audio data stream, deriving a syntax element from the audio data stream, which identifies a set of types of supplemental information messages to be included in the predetermined portion (13) from the audio data stream.

10. Apparatus according to any of the claims 1 to 9, configured for deriving a syntax element from the audio data stream, which indicates whether the one or more supplemental information messages are to be considered for verifying the audio data stream and which signals an identification of the one or more supplemental information messages to be included in the predetermined portion (13).

11. Apparatus according to claim 8, configured for, if the indication indicates that the one or more supplemental information messages are to be considered for verifying the audio data stream, deriving, from the audio data stream, a first syntax element indicating a count of supplemental information message types to be considered for the predetermined portion (13), and a respective number of second syntax elements, each of which identifies a respective supplemental information message type to be included in the predetermined portion (13).

12. Apparatus (10) for encoding an audio data stream (14) having an audio signal encoded thereinto, wherein the apparatus is configured for rendering the audio data stream checkable on trustworthiness, and encoding, into the audio data stream, a plurality of payload packets (16) carrying payload data, and further encoding, into the audio data stream, supplemental information packets (18), the supplemental information packets carrying supplemental information messages, wherein the apparatus is configured for

    inserting (23), into the audio data stream, an indication (51), which indicates whether one or more supplemental information messages are to be considered for verifying the audio data stream;
    determining (30') a predetermined portion (13) of the audio data stream, which predetermined portion (13) is to be rendered checkable on trustworthiness, by, if the indication indicates that the one or more supplemental information messages are to be considered for verifying the audio data stream, including, into the predetermined portion (13), one or more of the supplemental information messages;
    obtaining (41') a digital signature (43) based on the predetermined portion (13).

13. Method for decoding an audio data stream (14) having an audio signal encoded thereinto, the audio data stream comprising a plurality of payload packets (16) carrying payload data, and further comprising supplemental information packets (18), the supplemental information packets carrying supplemental information messages (19), wherein the method comprises

deriving (21), from the audio data stream, an indication (51), which indicates whether one or more supplemental information messages are to be considered for verifying (40) the audio data stream;

determining (30) a predetermined portion (13) of the audio data stream by, if the indication (51) indicates that the one or more supplemental information messages are to be considered for verifying the audio data stream, including, into the predetermined portion, the one or more supplemental information messages;

obtaining (21), from an indication in the audio data stream, a digital signature (43) for verifying the predetermined portion (13).

14. Method for encoding an audio data stream (14) having an audio signal encoded thereinto, wherein the method comprises rendering the audio data stream checkable on trustworthiness, and encoding, into the audio data stream, a plurality of payload packets (16) carrying payload data, and further encoding, into the audio data stream, supplemental information packets, the supplemental information packets carrying supplemental information messages, wherein the method comprises

inserting (23), into the audio data stream, an indication, which indicates whether one or more supplemental information messages are to be considered for verifying the audio data stream;

determining (30') a predetermined portion (13) of the audio data stream, which predetermined portion (13) is to be rendered checkable on trustworthiness, by, if the indication indicates that the one or more supplemental information messages are to be considered for verifying the audio data stream, including, into the predetermined portion (13), one or more of the supplemental information messages;

obtaining a digital signature (43) based on the predetermined portion (13).

15. Audio data stream having an audio signal encoded thereinto, the audio data stream being checkable on trustworthiness, the audio data stream comprising:

a plurality of payload packets (16) carrying payload data, and further comprising supplemental information packets, the supplemental information packets carrying supplemental information messages; and

an indication, which indicates whether one or more supplemental information messages are to be considered for trustworthiness of the audio data stream.

Fig. 1

EP 4 734 520 A1

Fig. 2

Fig. 3

Fig. 4

EP 4 734 520 A1

Fig. 5

Fig. 6

Fig. 7

Fig. 8

Fig. 9

EP 4 734 520 A1

84b

=

24'''

84

86

84a

+

26

82

80

=

12'

Fig. 10

Europäisches Patentamt

European Patent Office

Office européen des brevets

## EUROPEAN SEARCH REPORT

**Application Number**

EP 25 21 0446

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Füg Simone ET AL: "An Introduction to MPEG-H 3D Audio", , 1 January 2015 (2015-01-01), XP055866069, Retrieved from the Internet: URL:https://pub.dega-akustik.de/DAGA_2015/data/articles/000515.pdf [retrieved on 2021-11-25] * abstract * * page 26 - page 27 * ----- | 1-15 | INV. H04N19/70 G06F21/64 H04L9/32 H04L9/40 H04N21/835 |
| Y,P | Anonymous: "ONVIF - Media Signing Specification", , 31 December 2024 (2024-12-31), pages 1-25, XP093373658, Retrieved from the Internet: URL:https://www.onvif.org/specs/2412/ONVIF -MediaSigning-Spec-v2412.pdf [retrieved on 2026-03-05] * sections 5.1-5.7 * * Annex B * * figures 10-14 * ----- | 1-15 | |
| A | Anonymous: "Dolby AC-4: Audio Delivery for Next-generation Entertainment Services", , 1 June 2015 (2015-06-01), XP055324838, Retrieved from the Internet: URL:http://www.dolby.com/us/en/technologie s/ac-4/Next-Generation-Entertainment-Servi ces.pdf [retrieved on 2016-11-30] * figures 10, 16 * ----- -/-- | 1-15 | TECHNICAL FIELDS SEARCHED (IPC) H04N H04L G06F |

The present search report has been drawn up for all claims

| Place of search | Date of completion of the search | Examiner |
|---|---|---|
| The Hague | 6 March 2026 | Stoufs, Maryse |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

**Application Number**

**EP 25 21 0446**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SUEHRING K ET AL: "AHG9: Digitally Signed Content Authentication SEI", 147. MPEG MEETING; 20240715 - 20240719; SAPPORO; (MOTION PICTURE EXPERT GROUP OR ISO/IEC JTC1/SC29/WG11), , no. m68490 5 July 2024 (2024-07-05), XP030321618, Retrieved from the Internet: URL:https://dms.mpeg.expert/doc_end_user/documents/147_Sapporo/wg11/m68490-JVET-AI0127-v1-JVET-AI0127-v1.zip JVET-AI0127-v1.docx [retrieved on 2024-07-05] * the whole document * | 1-15 | |

-----

**TECHNICAL FIELDS
SEARCHED (IPC)**

The present search report has been drawn up for all claims

| Place of search | Date of completion of the search | Examiner |
|---|---|---|
| The Hague | 6 March 2026 | Stoufs, Maryse |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

...........................................................................................
& : member of the same patent family, corresponding
   document

EPO FORM 1503 03.82 (P04C01)